(19) Europäisches Patentamt
European Patent Office
Office européen des brevets

(11) Publication number: **0 407 602 A1**

(12) **EUROPEAN PATENT APPLICATION published in accordance with Art. 158(3) EPC**

(21) Application number: **90901027.4**

(22) Date of filing: **28.12.89**

(86) International application number: **PCT/JP89/01337**

(87) International publication number: **WO 90/07472 (12.07.90 90/16)**

(51) Int. Cl.[5]: **C04B 18/14**, C04B 26/02, C04B 28/18, C04B 38/08

(30) Priority: **28.12.88 JP 329148/88**
**28.12.88 JP 329149/88**
**12.06.89 JP 146667/89**
**12.06.89 JP 146668/89**
**12.06.89 JP 146669/89**
**12.06.89 JP 146670/89**
**06.09.89 JP 231294/89**

(43) Date of publication of application: **16.01.91 Bulletin 91/03**

(84) Designated Contracting States: **FR**

(71) Applicant: **NKK CORPORATION**
**1-2, Marunouchi 1-chome Chiyoda-ku**
**Tokyo 100(JP)**

(72) Inventor: **SATO, Kazuyoshi NKK Corporation**
**1-2, Marunouchi 1-chome Chiyoda-ku**
**Tokyo 100(JP)**
Inventor: **HARA, Masakazu NKK Corporation**
**1-2, Marunouchi 1-chome Chiyoda-ku**
**Tokyo 100(JP)**
Inventor: **KAMURA, Hisaya NKK Corporation**
**1-2, Marunouchi 1-chome Chiyoda-ku**
**Tokyo 100(JP)**

(74) Representative: **Gillard, Marie-Louise et al**
**Cabinet Beau de Loménie 55, Rue d'Amsterdam**
**F-75008 Paris(FR)**

(54) **LIGHTWEIGHT MOLDING AND PRODUCTION THEREOF.**

(57)

EP 0 407 602 A1

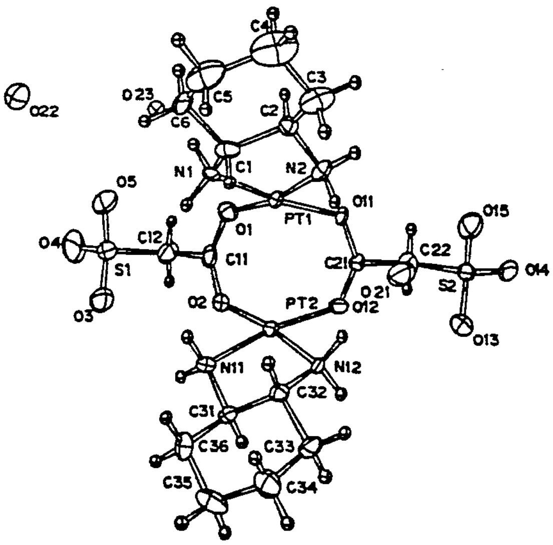

FIG. 12

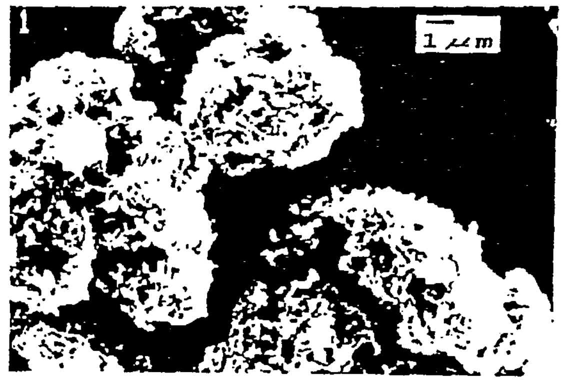


1 μm

This invention relates to binuclear platinum complexes including di-μ-sulfoacetatobis[diaminocyclohexanecobalt (II)] and its isomers and to an antineoplastic agent containing them as an active ingredient. These complexes have reduced side effects such as nephrotoxicity and a high antineoplastic activity.

TITLE MODIFIED
see front page



SPECIFICATION

LIGHT WEIGHT FORMED BODY AND PRODUCING THE SAME

## Technical Field

This invention relates to a light weight formed body used for building materials, heat-insulating materials, furnitures, backing materials and the like, and to producing the same.

## Background Art

The formed body comprising a calcium silicate as the principal component is called artificial wood or the like, and is widely utilized as a building material. As the manufacturing method, first, water is added to a siliceous raw material and a calcareous raw material to form a slurry mixture, and then gelated by reacting at about 90°C. The gelated material is put in an autoclave, and allowed to react at 190 to 250°C for several hours to synthesize xonotlite. Glass fiber, surfactant, polymer dispersion and the like are optionally added to the xonotlite slurry in order to improve toughness, and mixed with stirring. Then, the slurry is poured in a mold form, and dehydrated by pressing. The pressed matter is dried at about 120°C to obtain a formed body (Cement and Concrete, No. 469, Mar. 1986, p 37-43).

Xonotlite is a calcium silicate hydrate, and $CaO/SiO_2$

molar ratio is almost 1. The crystal system of xonotlite is, in general, pseudo rhombic lattice (a=17.17 Å, b=3.69 Å, c=6.96 Å, ß=89.6°), and the composition formula is $Ca_6(Si_6O_{17})(OH)_2$. The crystal structure is characterized by having a fiber form of which the longitudinal direction extends along b-axis. While, BET specific surface area of xonotlite particle is about 25-30 $m^2/g$.

There are various patent applications with respect to calcium silicate formed body, and for example, Japanese Patent KOKAI No. 52-15516 discloses a method comprising mixing a siliceous raw material powder and a calcareous raw material powder in water and allowing to react under heating to obtain an aqueous slurry of calcium silicate, and adding a polymer emulsion thereto to be adsorbed by calcium silicate. Japanese Patent KOKAI No. 54-160428 discloses a method of a method comprising adding hydraulic gypsum, a polymer emulsion and a coagulant for the polymer emulsion to calcium silicate produced from a calcareous raw material and a siliceous raw material through hydrothermal synthetic reaction to form an aqueous slurry, and forming followed by drying to obtain a formed body. Japanese Patent KOKAI No. 60-246251 discloses a method comprising adding a latex of styrene-butadiene copolymer containing carboxyl group and a cation type polymer coagulant to calcium silicate produced from a calcareous raw material and a siliceous raw material through hydrothermal synthetic reaction to form an aqueous slurry, and forming followed by drying to obtain a formed

body. Japanese Patent KOKAI No. 63-85038 discloses a method comprising adding water to a mixture of a lime raw material and a silicate raw material to form a slurry, producing a slurry of calcium silicate crystals by heating with stirring in an autoclave, adding synthetic pulp or a thermal denaturation therof to the slurry, dehydrating and forming followed by drying to obtain a formed body. Japanese Patent KOKAI No. 63-201050 discloses a method comprising mixing a lime stone raw material powder with a siliceous raw material powder, adding water thereto to produce a calcium silicate slurry through hydrothermal reaction, adding sepiolite which adsorbed a polymer emulsion and a reinforcing fiber to the slurry, dehydrating and forming by pressing, and drying to obtain a formed body. Furthermore, Japanese Patent KOKAI No. 63-260847 discloses that in a method comprising adding a latex of styrene-butadiene copolymer containing carboxyl group to calcium silicate hydrate procduced from a calcareous raw material and a siliceous raw material through hydrothermal synthetic reaction to form an aqueous slurry and forming followed by drying to obtain a formed body, the formed body is reinforced by a fibrous net body.

As mentioned heretofore, in every conventional calcium silicate formed body, calcium silicate such as xonotlite was produced from a calcareous raw material and a siliceous raw material through hydrothermal reaction by heating them at 190-250°C for several hours under a saturated water vapor pressure. The conventional calcium silicates formed body

had a problem being expensive because of not only using a highly pure calcareous raw material and siliceous raw material as the raw materials but also consuming a great quantity of energy. Besides, the bending strength of conventional calcium silicate formed bodies was about 80-120 $kgf/cm^2$, and the improvement in the strength was desired. Furthermore, the crystallization water per unit weight of xonotlite was small. Though the heat resistance is high, the xonotlite was poor in the autolysis to release the crystallization water which was also desired to be improved.

Disclosure of Invention

The present invention provides light weight formed bodies which have solved the above problems and methods of producing them. It is characterized by that the principal material is a surface-reformed slag (which means the slag reformed by two kinds of reforming, i.e. the reforming through the dissolution reaction and the hydration reaction of glass and the further reforming through dehydration under heating), and that one or more of a polymer dispersion, a reinforcing fiber, a coagulant, a light weight aggregate, a thickener, a dispersing agent, a pigment, a synthetic pulp, a needle- to fiber-shaped calcium silicate hydrate and a hydraulic gypsum are further used together with the above principal materials.

The surface-reformed slag produced through the dissolution reaction and the hydration reaction of glass is produced by inducing the dissolution reaction and the hydration reaction of glass by treating a glassy blast furnace slag powder with an aqueous alkali solution, and thereby reforming the surface. The form is like a cluster of grapes wherein spheres or almost spherical materials are piled up, different from xonotlite. The main hydration product is tobermorite or an analogous mineral thereof. The glassy blast furnace slag as the raw material may be either of water granulated slag or an air granulated slag or the like. The grain size is preferably fine, and for example, more than 4,000 $cm^2/g$, particularly about 8,000-14,000 $cm^2/g$, in Blaine specific surface area is suitable. In order to obtain the slag having such a grain size, the slag may be pulverized by a grain size, the slag may be pulverized by a grinder and a classifier or the like, if necessary. The specific surface area of the raw slag

influences the properties, particularly the bulk specific gravity, of the light weight formed body of the invention. Preferred alkali aqueous solutions are caustic alkali solutions such as caustic soda and caustic potash, and as to the concentration, more than 0.5 N, particularly more than 1 N is preferred. In view of practical use, caustic soda is convenient. While, to combine alkalies is also effective. It is also effective to combine a suitable amount of sodium carbonate with a caustic soda. The treating time is more than 30 minutes, usually about 1 hour to 10 hours, though it is different according to the treating temperature and the like. In order to accelerate reaction, the treating temperature is preferably higher, and about 90 °C in practical viewpoint. While, to conduct hydrothermal reaction beyond 100 °C is also preferred. Through the alkali treatment, the dissolution reaction and the hydrate formation reaction occur on the surface of the glassy blast furnace slag particle. As a result, the slag surface is made porous, and the BET specific surface area becomes about 20-140 $m^2/g$, preferably more than 40 $m^2/g$, further preferably more than 90 $m^2/g$. The surface-reformed slag particles can be discriminated by the observation through an electron microscope. A photograph of scanning electron microscope of the surface-reformed slag is shown in Figure 12, and a photograph of scanning electron microscope of a glassy blast furnace slag, respectively. After the alkali treatment, alkali is removed by washing with water, and

then, subjeted to use. The manufacturing method of such a surface-reformed slag is disclosed in Japanese Patent KOKOKU No. 57-7093 and Japanese Patent KOKAI No. 1-252559, and as to the utilization, an elimination method of phosphorus (Japanese Patent KOKAI Nos. 56-51283, 61-28491, 61-64392), a simultaneous elimination method of arsenic and silicon (Japanese Patent KOKAI No. 62-45394), a dehydration method of a high water content slurry material (Japanese Patent KOKOKU No. 60-26600) and the like are disclosed.

By dehydrating the surface-reformed slag by heating at about 250-800°C, preferably at about 450°C, for example, the BET specific surface area of 100 $m^2/g$ can be raised to about 120-140 $m^2/g$, though it is different according to the initial state. Thus, the effectiveness of the dehydration under heating of hydration-reformed slag was first found by the inventors, and the industrial significance is very great (Japanese Patent KOKAI No. 1-252559). While, at this time, it is important to select temperature and time conditions so that a sintering phenomenon does not occur by the dehydration under heating. The use of the dehydrated under heating slag is preferred, because the specific and the moisture absorption-desorption properties can be improve.. In the present specification, the dehydrated under heating slag is also expressed as the surface-reformed slag.

Preferred polymer dispersions adhere to the surface-reformed slag particles uniormly, and various rubber latexes, synthetic resin emulsions and the like are usable.

The rubber latexes are, for example, natural rubber latexes and the latexes of styrene-butadiene copolymer, acrylonitrile-butadiene copolymer, chloroprene polymer and the like, and the synthetic resin emulsions are, for example, the emulsions of ethylene-vinyl acetate copolymer, vinyl acetate polymer, acrylate polymer, vinylidene chloride polymer, vinyl chloride polymer and the like.

A suitable content of the polymer dispersion is about 3-20 %, particularly about 5-10 %, in the ratio by weight of solid matter to the surface-reformed slag. In the case of less than 3 %, the improvement in the strength and the mechanical processibility are insufficient. While, in the case of beyond 20 %, the reduction of the fire resistance becomes a problem in practical viewpoint.

The synthetic pulp is produced form a synthetic resin which is made hydrophilic in pulp form, and there are polyethylene pulp, polypropylene pulp, etc. A suitable content is about 3-20 %, particularly about 5-10 %, in the ratio by weight to the surface-reformed slag. In the case of less than 3 %, the improvement in the mechanical processibility and the surface glossiness are insufficient. While, in the case of beyond 20 %, the fire resistance decreases.

The calcium silicate hydrate can be obtained from a siliceous raw material and a calcareous raw material by adding water to them to induce a hydrothermal reaction. The kind of the calcium silicate hydrate is not restricted.

However, needle to fiber crystalline substance such as xonotlite and tobermorite are preferable, and xonotlite is particularly preferable in view of heat resistance and dimensional stability of the formed body.

A suitable blending ratio by weight of the surface-reformed slag to the above calcium silicate hydrate is 9:1 to 1:9, preferably 7:3 to 3:7, and it is suitably selected according to the required properties.

The hydraulic gypsum may be α-type or ß-type gypsum hemihydrate, anhydrous gypsum or the like, and a calcined gypsum of which the principal component is ß-type gypsum hemihydrate is preferred. A suitable content of the gypsum is about 10-150 %, preferably 30-70 %, by weight ratio to the surface-reformed slag. When the content is less than 10 %, the improvement effect on the bending strength is small. While, when the content is beyond 150 %, the mechanical processibility and the specific strength decrease. A setting conditioner of gypsum such as sodium citrate may be added, if necessary.

The reinforcing fiber is an inorganic fiber such as glass fiber or carbon fiber, a synthetic fiber, a natural fiber, etc. The synthetic fiber is polyester fiber, polyethylene fiber, etc., and the natural fiber is pulp, cotton, mineral fiber, etc. Among them, glass fiber is particularly preferable in view of incombustibility and cost.

A suitable content of the reinforcing fiber is about

2-10 % in the ratio by weight to the surface-reformed slag, though it depends on the specific gravity of the fiber and the like. When the content is less than 2 %, the reinforcing effect is not effective in practical viewpoint. While, when the content is beyond 10 %, it is difficult to secure the uniform dispersibility.

By adding a coagulant for the polymer dispersion, the adsorptivity of the polymer dispersion on the surface-reformed slag can be increased, and water-filtering (dehydration) ability in the pressure forming process is improved. While, the quantity of organic materials leaking in drainage can be reduced, and the drainage treatment can easily be conducted.

As the coagulant, though there are inorganic coagulants such as aluminum sulfate, organic coagulants, particularly cationic polymer coagulants are preferred for the formed body of the invention. As the examples of the cationic polymer coagulants, there are quaternary amine compound such as polydialkylaminoalkylacrylate, polyaminomethylacrylamide, polyvinylpyridinium halide and polyvinylimidazoline, and the like.

A preferable content of the coagulant is, in the case of a cationic polymer coagulant, about 0.05-0.2 part by weight against 1 part by weight (solid matter weight) of the polymer dispersion.

A light weight aggregate can be added to the light weight formed body. The light weight aggregate is perlite,

sirasu balloon or the like. The content beyond 60 % by weight ratio to the surface-reformed slag unpreferable, because the strength, the processibility and the like decreases.

A thickener may be added to the light weight formed body in order to secure the improvement in the dispersibility of the reinforcing fiber, the formability at forming and the like. As the thickener, water-soluble polymer, in general, cellulose ethers are used.

A dispersing agent may be added to the light weight formed body in order to improve the dispersion of the polymer, the reinforcing fiber and the like, the fluidity of kneading slurry and the like. As the dispersing agent, naphthalene sulfonate-formalin high condensates, melamine sulfonic acid compounds and the like are used.

The light weight formed body may be colored by adding various pigments. Examples of the pigments are inorganic pigments such as lead white, red lead, chrome yellow, ultramarine, Berlin blue, cobalt oxide, titanium dioxide, titanium yellow, iron oxide red, iron oxide black, molybdate orange, litharge and aluminum powder and organic pigments such as azo pigments and phthalocyanine pigments.

The light weight formed body may contain other additives within the extent not to impair the characteristics. The additives are suitably selected from known additives for calcium silicate formed body.

As the manufacturing method of the light weight formed

body, it is enough that a mixture containing a surface-reformed slag powder (or a slurry containing it), hydraulic gypsum, a polymer dispersion, etc. and water is kneaded, and formed followed by drying. In the case of adding the reinforcing fiber, the coagulant, the synthetic pulp, the calcium silicate hydrate, the light weight aggregate, the thickener, the dispersing agent, the pigment, etc., they are added before or during kneading. Water for kneading may be added in a form of a suspension or aqueous solution of one or more of the above components. Besides, the surface-reformed slag or calcium silicate hydrate washed with water is used without drying, and the water content may be utilized for kneading.

While, when there is the possibility that defects occur in the formed body by the contamination of the kneaded slurry with bubbles, an antifoaming agent may be added to the slurry or the slurry may be defoamed under reduced pressure during or after kneading.

The forming method may be selected from pressing, paper making, extruding, pressure reducing and the like according to the object and use of the final product, however, a common method is composed of pressing a slurry produced by kneading to form it by dehydration. In this case, the slurry is, in general, poured into a mold such as a mold form and pressed. In order to improve uniform dehydration and forming efficiency, wire gauze, filter paper, filter cloth, porous plate or the like may be used for the pressing

face, an unit capable of dehydration and defoaming under reduced pressure may be incorporated, or an embossed plate may be incorporated in order to improve the design of the surface. Moreover, after dehydration by pressing, the formed body may be cut into a prescribed form. The pressing may be conducted at a pressure capable of dehydrating up to a prescribed degree, for example, it is adjusted so that the bulk specific gravity of the formed body becomes a prescribed body, and it is usually 10-100 $kgf/cm^2$, preferably 20-60 $kgf/cm^2$.

While, it should be noted that the technical point varies according to the selected forming method, such as, in the extrusion forming, the optimum water content is different from that in the pressing forming, and in the forming through the paper making process, a devise is necessary for the stable incorporation (fixing) of an additive such as the polymer dispersion into the formed body.

A preferable degree of the drying is to remove the water content in the formed body and to allow the crystallization water of the surface-reformed slag to remain, and for example, the drying may be conducted under heating at about 100-180 °C, preferably at about 110-150 °C. In order to prevent cracking by drying of the formed body, to conduct predrying at about 60-80 °C is also preferred.

The light weight formed body of the invention has the composition of the kneaded matter from which water is

eliminated, and it is a porous body having a bulk specific gravity of about 0.2-1 $g/cm^3$, preferably about 0.4-0.6 $g/cm^3$.

In the light weight formed body of the invention, the complex texture of which the principal component is the surface-reformed slag in a spherical form to a grape cluster form has heat resistance, heat-insulating property, moisture-controlling property and the like, and it is the principal component of the light weight formed body. The reformed slag has a good physical adsorptivity and has an action to facilitate coloring by various pigments or the like. Gypsum hydrate (gypsum dihydrate) raises strength such as bending strength of the light weight formed body without reducing the incombustibility. The polymer dispersion adheres onto the surface of the surface-reformed slag particles to bind the particles, and improves toughness, processibility such as cutting, scraping and nailing, bending strength, tensile strength and the like. The synthetic pulp not only imparts mechanical processibility such as cutting, scraping and nailing to the formed body, but also improves surface glossiness and further water filterability (dehydration ability). The calcium silicate hydrate improves heat resistance, dimensional stability and the like. The reinforcing fiber raises strength such as rupture strength. The coagulant raises the fixation ability of the polymer dispersion to the surface-reformed slag, and improves water filterability

(dehydration ability) in the press forming process. The light weight aggregate raises heat-insulating ability, as well as makes the formed body lighter. The thickener improves the dispersion of the reinforcing fiber. The dispersing agent improves the dispersion of the polymer, the reinforcing fiber and the like. The pigment colors the light weight formed body.

## BRIEF DESCRIPTION OF DRAWINGS

Figure 1 is a perspective view of a light weight formed body being an embodiment of the invention. Figure 2 is a graph illustrating curves showing moisture absorption-desorption properties as to products of the invention and a conventional product, and Figure 3 is a graph illustrating similar curves as to the formed bodies using two kinds of the surface-reformed slags, respectively. Figure 4 is a graph showing the relation between the Blaine specific surface area and the bulk specific gravity of a slag powder. Figure 5 is a graph illustrating equilibrium moisture content curves of products of the invention and conventional products. Figure 6 is a graph illustrating the relation between the content of glass fibers and the bending strength. Figure 7 is a graph illustrating curves showing moisture absorption-desorption properties as to the formed bodies using two kinds of the surface-reformed slags. Figure 8 is a graph illustrating curves showing moisture

absorption-desorption properties as to produces of the invention and conventional products, and Figure 9 is a graph illustrating similar curves as to the formed bodies using two kinds of the surface-reformed slags, respectively. Figure 10 is a graph illustrating curves showing moisture absorption-desorption properties as to the formed bodies using two kinds of the surface-reformed slags. Figure 11 is a graph illustrating curves showing moisture

absorption-desorption properties as to a light weight formed body produced in a method of the invention and a conventional light weight formed body, respectively. Figure 12 is a photograph of scanning electron microscope showing particle structures of the surface-reformed slag, and Figure 13 is that of a glassy blast furnace slag.

## Best Mode for Carrying Out the Invention

Examples of the invention are shown below.

The properties of the light weight formed body in the examples were measured according to the following methods.

Bulk specific gravity: The weight and size of the formed body was measured, and it was determined by calculation.

Bending strength: According to JIS A 1106-1976. The size of the test piece was 40 mm x 160 mm x 25 mm.

Processibility: Evaluated in 3 ranks of ○, △, X from good ones in view of cuttability by a saw, scraping ability by a plane, nailing ability, etc.

Combustibility: According to JIS A 1321-1975. The size of the test piece was 40 mm x 40 mm x 50 mm, and the heating time was 30 seconds.

Moisture absorption-desorption property: Moisture absorption property was determined by allowing to stand in a thermohydgrostat at 20°C at 50 % relative humidity for more than 72 hours, confirming that it is a constant weight, changing the humidity to 90 % relative

humidity, and measuring the increase in weight. Moisture desorption was determined similarly by rendering a constant weight at 90 % relative humidity, changing to 50 %, and measuring the decrease in weight.

Resistance to wounding: Abrasion test (sand dropping method) for building material and building construction portion was conducted according to JIS A 1452-1972 A and C, and this property was evaluated by the degree to lose the surface glossiness and the degree to lose the surface layer through observation in 3 ranks of ◎, ○, X from good ones.

Particle size distribution of ground dust: Determined by sieving using standard sieves and measuring the weight.

Specular gloss of polished face: Conducted according to JIS Z 8741-1962.

Dimensional stability: A test piece of 40 mm in breadth x 160 mm in length x 25 mm in height was allowed to stand in a thermohygrostat at 20 °C at 65 % relative humidity until to reach a constant weight. Then, it was dried at 110 °C for 24 hours, and the variation rate from the original length was measured. While, the test piece was immersed in water at 20 °C for 24 hours, and the variation rate was measured similarly. In examples, the dimensional stability was expressed in the following variation rate in length.

Variation rate in length:

$$\text{Variation rate in length} = \frac{l_1 - l_2}{l_1} \times 100\ (\%)$$

$l_1$: Basic length at 20°C, at 65 % RH

$l_2$: Length after drying or water absorption

Water filterability: Evaluated by the time taken for pressing to dehydrate a slurry adjusted so that the bulk specific gravity became 0.5 (containing a fixed quantity of solid matter) up to a fixed thickness to form it.

Examples 1-4

Glassy blast furnace slag (blast furnace water granulated slag, manufactured by Keihin Works, NKK Corporation) was ground up to a Blaine specific surface area of 4,500 $cm^2/g$ by a ball mill, and classified as the raw material for classification by an air classifier to obtain a pulverized slag having a Blaine specific surface area of 14,000 $cm^2/g$.

The pulverized slag was added to NaOH solution 3 normal in concentration at a temperature of 90°C at a rate of 5 g per 100 ml thereof, and treated with stirring for 3 hours to obtain the surface-reformed slag of a BET specific surface area of 100 $m^2/g$. The surface-reformed slag was sufficiently washed with water to remove alkali materials and dried, and used as the raw material for producing the formed body.

To 100 parts by weight of the surface-reformed slag, each 5, 10, 20, 30 parts by weight (as the solid matter) of a polymer dispersion (styrene-butadiene copolymer latex,

Nipol LX-438C, manufactured by Nippon Zeon Co., Ltd.) and water were added, and then kneaded. The slurry was poured in a mold form, and formed with gradual dehydration by pressing. This was dried at 60 °C for 15 hours and then at 110 °C for 5 hours to obtain the light weight formed bodies shown in Figure 1.

Comparative Example 1

An amorphous silicic acid and hydrated lime were blended so that the molar ratio of $SiO_2$ : CaO was 1 : 1, and 5 times in quantity of water was added. The mixture was allowed to react at 90 °C for 3 hours, and C-S-H gel (C : CaO, S : $SiO_2$, H : $H_2O$) was first obtained.

Subsequently, 3 times in quantity of water was added to the slurry, and allowed to react in an autoclave under the conditions of 209 °C and 19 $kgf/cm^2G$ for 3 hours with stirring to produce calcium silicate hydrate. The produced hydrate was confirmed to be xonotlite by powder X-ray diffraction. To 100 parts by weight of the xonotlite powder, 10 parts by weight of the same polymer dispersion as Example 1 (styrene-butadiene copolymer latex) and water were added, and formed in a similar method to Examples 1-4 to produce a light weight formed body.

The properties examination results are shown in Table 1 and Figure 2.

Table 1

| | | Example1 | Example2 | Example3 | Example4 | Comparative1 |
|---|---|---|---|---|---|---|
| Composition (wt. Part) | Surface-Reformed Slag | 100 | 100 | 100 | 100 | 0 |
| | Calcium Silicate Hydrate (Xonotlite) | 0 | 0 | 0 | 0 | 100 |
| | Polymer Dispersion (Styrene-Butadiene Copolymer Latex) | 5 | 10 | 20 | 30 | 10 |
| Properties | Bulk Specific Gravity ($g/cm^3$) | 0.50 | 0.50 | 0.50 | 0.50 | 0.50 |
| | Bending Strength ($kgf/cm^2$) | 11 | 21 | 30 | 41 | 16 |
| | Processibility | △ | ○ | ○ | ○ | ○ |
| | Combustibility | in-combustible | in-combustible | in-combustible | combustible | in-combustible |

The measured results of the moisture absorption-desorption properties of the light weight formed body of Example 2 (B) and the light weight formed body of Comparative Example 1 (C) are shown in Figure 2. The moisture absorption curve was obtained by measuring the weight variation with time when RH was elevated from 50 % to 90 % at 20°C, and the moisture desorption curve was obtained by measuring the weight variation with time when RH was lowered from 90 % to 50 % at 20°C conversely.

Table 1 and Figure 2 show that the formed body using the surface-reformed slag is excellent in strength and moisture absorption-desorption properties compared with the

formed body using xonotlite.

Examples 5-8

The surface-reformed slag having a BET specific surface area of 100 $m^2/g$ prepared in Examples 1-4 was dehydrated under heating at 450 °C for 4 hours to obtain the surface-reformed slag of which the BET specific surface area was improved up to 120 $m^2/g$.

To 100 parts by weight of the above surface-reformed slag of 120 $m^2/g$, each 5, 10, 20, 30 parts by weight (as the solid matter) of the same polymer dispersion as Examples 1-4 and water were added, and then kneaded to obtain the light weight formed bodies similar to Examples 1-4.

The properties examination results of the light weight formed bodies are shown in Table 2.

Table 2

| | | Example 5 | Example 6 | Example 7 | Example 8 | Comparative 1 |
|---|---|---|---|---|---|---|
| Composition (wt. Part) | Surface-Reformed Slag | 100 | 100 | 100 | 100 | 0 |
| | Calcium Silicate Hydrate (Xonotlite) | 0 | 0 | 0 | 0 | 100 |
| | Polymer Dispersion (Styrene-Butadiene Copolymer Latex) | 5 | 10 | 20 | 30 | 10 |
| Properties | Bulk Specific Gravity (g/cm$^3$) | 0.47 | 0.47 | 0.47 | 0.47 | 0.50 |
| | Bending Strength (kgf/cm$^2$) | 13 | 20 | 32 | 40 | 16 |
| | Processibility | △ | ○ | ○ | ○ | ○ |
| | Combustibility | in-combustible | in-combustible | in-combustible | combustible | in-combustible |

The results of the moisture absorption-desorption properties of the light weight formed body of Example 6 (A) measured similar to the light weight formed body of Example 2 is also shown in Figure 2.

Table 2 and Figure 2 show that the formed body using the surface-reformed slag is excellent in specific strength (strength/specific gravity), and moisture absorption-desorption properties compared with the formed body using xonotlite.

Example 9

The light weight formed body was produced similar to

Example 2 except that an aqueous suspension of 5 parts by weight of glass fiber (chopped strand of E glass, 13 mm in length, manufactured by Nitto Boseki Co., Ltd.) was added.

Comparative Example 2

A light weight formed was produced similar to Comparative Example 1, except that the same aqueous suspension of 5 parts by weight of the glass fiber as Example 9 was added.

The properties examination results of both light weight formed bodies are shown in Table 3.

Table 3

| | | Example 9 | Comparative Example 2 |
|---|---|---|---|
| Composition (wt. Part) | Surface-Reformed Slag | 100 | 0 |
| | Calcium Silicate Hydrate (Xonotlite) | 0 | 100 |
| | Polymer Dispersion (SBR) | 10 | 10 |
| | Glass Fiber | 5 | 5 |
| Properties | Bulk Specific Gravity ($g/cm^3$) | 0.50 | 0.50 |
| | Bending Strength ($kgf/cm^2$) | 82 | 69 |
| | Processibility | ○ | ○ |
| | Combustibility | in-combustible | incombustible |

The examination results show that in the reinforcing fiber blended group, the formed body using the surface-reformed slag is excellent in strength properties compared with the formed boy using xonotlite.

Example 10

1 part by weight (0.1 part by weight to 1 part by weight of the polymer dispersion) of a cationic coagulant

(SUNFLOC C454, manufactured by Sanyo Chemical Ind. Ltd.) was added to the blend of Example 9, and the contaminated state of drainage with the polymer was compared with Example 9 through forming by press dehydrating.

A small quantity of the polymer contamination was observed in the drainage in Example 9 (no coagulant was added), whereas it was not observed in Example 10 (a coagulant was added).

Thus, by using a coagulant, water filterability (dehydration ability) could be improved through forming, and the drainage-treatment could be facilitated.

Examples 11-13

Each 10, 30, 60 parts by weight of a light weight aggregate (shirasu balloon, bulk density : 0.24, manufactured by Sanki Kogyo K.K.) was added to the blend of Example 10, and the light weight formed bodies were produced similarly.

The properties examination results of the produced formed bodies are shown in Table 4.

Table 4

| | | Example10 | Example11 | Example12 | Example13 |
|---|---|---|---|---|---|
| Composition (wt. part) | Surface-Reformed Slag | 100 | 100 | 100 | 100 |
| | Polymer Dispersion(SBR) | 10 | 10 | 10 | 10 |
| | Glass Fiber | 5 | 5 | 5 | 5 |
| | Coagulant | 1 | 1 | 1 | 1 |
| | Light Weight Aggregate (Shirasu Balloon) | 0 | 10 | 30 | 60 |
| Properties | Bulk Specific Gravity ($g/cm^3$) | 0.50 | 0.48 | 0.45 | 0.41 |
| | Bending Strength ($kgf/cm^2$) | 80 | 80 | 67 | 52 |
| | Processibility | ○ | ○ | ○ | △ |
| | Combustibility | in-combustible | in-combustible | in-combustible | incombustible |

The examination results show that to make the formed body lighter is possible by blending a light weight aggregate.

Example 14

On the basis of the blend of Example 10, a coloring test of the formed body by pigments was conducted. The pigments used were 4 kinds (all manufactured by Dainichi Seika K.K.), i.e. yellow (Ti-Sb-Ni), brown (Fe-Zn), green (Ti-Zn-Ni-Co) and blue (Co-Al-Zn), of dipyroxide color.

The surface-reformed slag has a good adsorptivity, and color unevenness did not occur and uniform coloring was

possible.

Example 15

To 100 parts by weight of the surface-reformed slag of 120 $m^2/g$ produced in Examples 5-8, the same aqueous suspension as Example 10 of 10 parts by weight of the polymer dispersion, 5 parts by weight of the glass fiber and 1 part by weight of the cationic coagulant was added, and then kneaded.

The light weight formed body was produced from the above slurry similar to Example 10.

The properties examination results of the light weight formed body are shown in Table 5 and Figure 3 together with the results of Example 10 using the surface-reformed slag of 100 $m^2/g$ as a comparative example.

Table 5

| | | Example 15 | Comparative Example (Example 10) |
|---|---|---|---|
| Composition (wt. Part) | Surface-Reformed Slag ($120\ m^2/g$) | 100 | 0 |
| | Surface-Reformed Slag ($100\ m^2/g$) | 0 | 100 |
| | Polymer Dispersion (SBR) | 10 | 10 |
| | Glass Fiber | 5 | 5 |
| | Light Weight Aggregate (Shirasu Balloon) | 1 | 1 |
| Properties | Bulk Specific Gravity ($g/cm^3$) | 0.47 | 0.50 |
| | Bending Strength ($kgf/cm^2$) | 81 | 80 |
| | Processibility | ○ | ○ |
| | Combustibility | in-combustible | incombustible |

The measured results of the moisture absorption-desorption properties of the light weight formed body of this Example (D) and that of Example 10 (E) are shown in Figure 3. The moisture absorption curve was obtained by meausring the weight variation with time when RH

was elevated from 50 % to 90 % at 20°C, and the moisture desorption curve was obtained by measuring the weight variation with time when RH was lowered from 90 % to 50 % at 20°C conversely.

The results of Table 5 and Figure 3 show that the improvement in the specific strength (strength/specific gravity) and in the moisture absorption-desorption properties is possible by using the surface-reformed slag of 120 $m^2/g$.

Example 16

Glassy blast furnace slag was ground up to a Blaine specific surface area of 4,500 $cm^2/g$ by a ball mill, and classified as the raw material for classification by an air classifier to obtain a pulverized slag having a Blaine specific surface area of 8,000, 14,000 $cm^2/g$.

The slag powder of 4,500, 8,000, 14,000 $cm^2/g$ was used as the raw material, and added to NaOH solution 3 normal in concentration at a temperature of 90°C at a rate of 5 g per 100 ml thereof, and treated with stirring for 3 hours to obtain the surface-reformed slag.

These surface-reformed slags were sufficiently washed with water to remove alkali materials, and dried to obtain powder materials.

The BET specific surface areas by the $N_2$ adsorption method of the surface-reformed slags were 55, 96, 103 $m^2/g$ for the Blaine specific surface area of 4,500, 8,000, 14,000

$cm^2/g$, respectively.

Subsequently, bulk specific gravities of the slag powders of the Blaine specific surface area of 4,500, 8,000, 14,000 $cm^2/g$ and the surface-reformed slags produced using them as the raw material were measured. The bulk specific gravities measured were the tapping bulk density determined by using a powder properties measuring device manufactured by Tsutsui Rikagaku Kikai K. K.

While, the light weight formed bodies were produced using the above surface-reformed slags as the raw material, and the influence of the kind of the raw material, and the influence of the kind of the raw material upon the bulk specific gravity of the formed body. As the manufacture of the light weight formed body, to 100 parts by weight of the surface-reformed slag, 10 parts by weight (as the solid matter) of a polymer dispersion (styrene-butadiene copolymer latex, Nipol LX-438C, manufactured by Nippon Zeon Co., Ltd.) 3 parts by weight of glass fiber (E glass chopped strand, MICROGLASS RES06, manufactured by Nippon Sheet Glass Co., Ltd.) and 300 parts by weight of water were added, and then, kneaded. Futhermore, 1 part by weight of a coagulant (SUNFLOC C-450, manufactured by Sanyo Chemical Ind. Ltd.) was added and kneaded to obtain a slurry where these raw materials were uniformly dispersed. The slurry was poured into a mold form, and formed with gradual dehydration by pressing. The final forming pressure of each surface-reformed slag was fixed to 60 $kgf/cm^2$. The formed

bodies were dried at 60 °C for 18 hours and then at 110 °C for 6 hours to obtain the light weight formed bodies.

The measured results of the bulk specific gravity of the slag powders, the surface-reformed slags and the formed bodies are shown in Figure 4. In the figure, the open circles indicate the slag powders, the closed circles indicate the surface-reformed slags, and the squares indicate the light weight formed bodies, respectively. The arrows in the figure indicate the corresponding relation. The results of Figure 4 show that the bulk specific gravity of the formed body is influenced by the Blaine specific surface area of slag powder, and when the Blaine specific surface area is greater, the bulk specific gravity of the formed body is smaller.

Example 17

0.3 part by weight of a cellulose ether thickener (HI-METHOLOSE, manufactured by Sinetsu Chemical Co., Ltd.) was added to the blend of Example 10, and the formed body was produced in a similar method to Example 10. The properties of the formed body is shown in Table 6.

Table 6

| | | Example |
|---|---|---|
| Composition(wt. Part) | Surface-Reformed Slag | 100 |
| | Polymer Dispersion SBR | 10 |
| | Glass Fiber | 5 |
| | Coagulant | 1 |
| | Thickener | 0.3 |
| Properties | Bulk Specific Gravity ($g/cm^3$) | 0.5 |
| | Bending Strength ($kgf/cm^2$) | 90 |
| | Processibility | ○ |
| | Combustibility | incombustible |

Thus, the formed body having a high bending strength is obtained by adding a thickener.

Example 18

Melamine sulfonate-formalin condensate (NL-4000, manufactured by Bozorisu Bussan K.K.) was added to the blend of Example 10 as a dispersing agent, and the formed body was produced in a similar method.

The properties of the produced formed body are shown in Table 7.

Table 7

| | | Example |
|---|---|---|
| Composition (wt. Part) | Surface-Reformed Slag | 100 |
| | Polymer Dispersion SBR | 10 |
| | Glass Fiber | 5 |
| | Coagulant | 1 |
| | dispersing Agent | 0.5 |
| Properties | Bulk Specific Gravity (g/$cm^3$) | 0.50 |
| | Bending Strength (kgf/$cm^2$) | 89 |
| | Processibility | ○ |
| | Combustibility | incombustible |

Thus, the formed body having a high bending strength is obtained by using a dispersing agent.

Example 19

Glassy blast furnace slag was ground up to a Blaine specific surface area of 4,680 $cm^2/g$ by a roller mill, and classified by an air classifier to obtain a pulverized slag having a Blaine specific surface area of 14,100 $cm^2/g$.

This was allowed to react in a mixed solution of 8 parts by weight of NaOH aqueous solution (Concentration : 3M) and 2 parts by weight of KOH aqueous solution

(Concentration : 3M) to obtain the surface-reformed slag having a BET specific surface area of 140 $m^2/g$.

The above surface-reformed slag was substituted for the surface-reformed slag having a BET specific surface area of 100 $m^2/g$ in Example 10, and the formed body was produced in a similar method. In order to investigate the moisture absorption-desorption properties of the produced formed body (F), the equilibrium moisture content was measured. The measurement was also conducted in a similar method as to the formed body of Example 10 (E), the formed body of Comparative Example 1 (C) and a natural wood of Japanese cypress (G).

The measurement of the equilibrium moisture content was conducted according to the method shown below.

① The sample size was a 3 cm cube.

② The temperature in the hygrostat was 20 $\pm$ 0.5 °C.

③ The humidity in each hygrostat was kept in 5 levels shown in Table 8 by salt saturated aqueous solutions in the coexisting state of crystals.

④ The sample was dried at 105°C $\pm$ 2°C up to the constant weight, and the absolute dry weight was measured.

⑤ The sample was first placed in the hygrostat of level 1, and it was confirmed that the sample became a constant weight. Then, the sample was transferred to level 2, 3, 4, 5 successively, and respective moisture contents were calculated by the following formula.

$$\text{Moisture Content} = \frac{\text{Weight at Constant Weight} - \text{Absolute Dry Weight}}{\text{Absolute Dry Weight}} \times 100\ (\text{wt.\%})$$

Table 8

| Level | Salt | Relative Humidity (at 20 °C) |
|---|---|---|
| 1 | $ZnCl_2$ $XH_2O$ | 10.0 % |
| 2 | $MgCl_2$ $6H_2O$ | 33.1 % |
| 3 | $Ca(NO_3)_z$ $4H_2O$ | 53.6 % |
| 4 | NaCl | 75.1 % |
| 5 | $KNO_3$ | 93.1 % |

Equilibrium moisture content curves are shown in Figure 5. Thus, it is apparent that the formed bodies of the examples have excellent moisture absorption-desorption properties.

Examples 20, 21

In the blend of Example 10, an acrylic-modified epoxy resin (ARMATEX, manufactured by Mitsui Toatsu Chemicals Inc.) was blended instead of SBR as the polymer dispersion, and the formed body was produced in a similar method. The properties of the obtained formed body are shown in Table 9.

Table 9

| | | Example 20 | Comparative Example 21 |
|---|---|---|---|
| Composition (wt. Part) | Surface-Reformed Slag | 100 | 0 |
| | Polymer Dispersion (Acrylic-Modified Epoxy) | 10 | 20 |
| | Glass Fiber | 5 | 5 |
| | Coagulant | 1 | 2 |
| Properties | Bulk Specific Gravity ($g/cm^3$) | 0.50 | 0.48 |
| | Bending Strength ($kgf/cm^2$) | 78 | 90 |
| | Processibility | △ | ○ |
| | Resistance to Wounding | ○ | ◎ |
| | Combustibility | in-combustible | incombustibility |

Thus, by using an acrylic-modified epoxy, the formed body produced has a good resistance to wounding and is excellent in incombustibility.

Example 22

In the blend of Example 10, 2 kinds of SBR and an acrylic-modified epoxy resin (ARMATEX, manufactured by

Mitsui Toatsu Chemicals Inc.) were blended instead of SBR as the polymer dispersion, and the formed body was produced in a similar method. The properties of the obtained formed body are shown in Table 10.

Table 10

| | | Example |
|---|---|---|
| Composition (wt. Part) | Surface-Reformed Slag | 100 |
| | Polymer Dispersion (SBR) | 5 |
| | Polymer Dispersion (Acrylic-Modified Epoxy) | 5 |
| | Glass Fiber | 5 |
| | Coagulant | 1 |
| Properties | Bulk Specific Gravity ($g/cm^3$) | 0.49 |
| | Bending Strength ($kgf/cm^2$) | 95 |
| | Processibility | ○ |
| | Combustibility | incombustible |

Thus, the formed body having a high bending strength is obtained by combining SBR and an acrylic-modified epoxy.

Example 23

On the basis of the blend of Example 10, glass fibers

having a fiber length of 6, 13, 25 mm were used, and the blending quantity was changed to 3, 5, 8, 10 parts by weight. The formed bodies were produced in a similar method to Example 10.

The properties of the obtained formed bodies are shown in Figure 6. In the figure, the open circles indicate the fiber length of 6 mm, X indicate the fiber length of 13 mm, and the squares indicate the fiber length of 25 mm.

Example 24

In the blend of Example 10, 3 parts by weight of pitch carbon fiber (manufactured by Kureha Chemical Ind. Co., Ltd.) were blended instead of 5 parts by weight of glass fiber, and the formed body was produced in a similar method. The properties of the produced formed body are shown in Table 11.

Table 11

| | | Example |
|---|---|---|
| Composition(wt.Part) | Surface-Reformed Slag | 100 |
| | Polymer Dispersion (SBR) | 10 |
| | Carbon Fibier | 3 |
| | Coagulant | 1 |
| Properties | Bulk Specific Gravity $(g/cm^3)$ | 0.48 |
| | Bending Strength $(kgf/cm^2)$ | 115 |
| | Processibility | ○ |
| | Combustibility | incombustible |

Thus, the formed body being light weight high strength can be produced by using carbon fiber.

Examples 25-28

The same surface-reformed slag having a BET specific surface area of 100 $m^2/g$ as the raw material for manufacturing the formed body of Examples 1-4 was used.

To 100 parts by weight of the above surface-reformed slag, each 5, 10, 20, 30 parts by weight (as the solid matter) of an aqueous suspension of polyethylene synthetic pulp (SWP-E790, manufactured by Mitsui Petrochemical Industries Co., Ltd.) was added, and then kneaded. The

slurry was poured into a mold form, and formed with gradual dehydration by pressing. The formed bodies were dried at 60 °C for 15 hours and then at 110 °C for 5 hours to obtain the light weight formed bodies shown in Figure 1.

Comparative Example 3

An amorphous silicic acid and hydrated lime were blended so that the molar ratio of $SiO_2$ : CaO was 1 : 1, and 5 times in quantity of water was added. The mixture was allowed to react at 90 °C for 3 hours, and C-S-H gel (C : CaO, S : $SiO_2$, H : $H_2O$) was first obtained.

Subsequently, 3 times in quantity of water was added to the slurry, and allowed to react in an autoclave under the conditions of 209 °C and 19 $kgf/cm^2G$ for 3 hours with stirring to produce calcium silicate hydrate. The produced hydrate was confirmed to be xonotlite by powder X-ray diffraction.

The surface-modified slag was changed to the above xonotlite, and 10 parts by weight of the synthetic pulp was changed to the polymer dispersion (styrene-butadiene copolymer latex), and a light weight formed body was produced similar to Example 2.

The proeperties examination results are shown in Table 12.

Table 12

| | | Example25 | Example26 | Example27 | Example28 | Comparative3 |
|---|---|---|---|---|---|---|
| Composition (wt. part) | Surface-Reformed Slag | 100 | 100 | 100 | 100 | 0 |
| | Calcium Silicate Hydrate (Xonotlite) | 0 | 0 | 0 | 0 | 100 |
| | Synthetic Pulp | 5 | 10 | 20 | 30 | 0 |
| | Polymer Dispersion (SBR) | 0 | 0 | 0 | 0 | 10 |
| Properties | Bulk Specific Gravity ($g/cm^3$) | 0.50 | 0.50 | 0.50 | 0.50 | 0.50 |
| | Bending Strength ($kgf/cm^2$) | 10 | 19 | 28 | 37 | 16 |
| | Processibility | ○ | ○ | ○ | ○ | ○ |
| | Combustibility | in-combustible | in-combustible | in-combustible | combuscible | incombuscible |
| Particle Size Distribution of Scraped Dust (wt.%) | +1190 µm | 41 | 48 | 58 | 67 | 8 |
| | 690-1190 µm | 11 | 12 | 15 | 16 | 11 |
| | 297-580 µm | 9 | 12 | 7 | 9 | 27 |
| | -297 µm | 39 | 28 | 20 | 8 | 54 |
| Specular Gloss Gs (75°) | | 31 | 49 | 53 | 64 | 21 |

Table 12 shows that, by adding synthetic pulp, dusting through the processing can be reduced, and the polished face shows beautiful gloss.

Example 29

To the blend of Example 26, an aqueous suspension of 5 parts by weight of glass fiber (chopped strand of E glass,

13 mm in length, manufactured by Nitto Boseki Co., Ltd.) was added, and the light weight formed body was produced similarly.

Comparative Example 4

To 100 parts by weight of the xonotlite powder of Comparative Example 1, the same aqueous suspension as Example 29 of 10 parts by weight of the synthetic pulp and 5 parts by weight of the glass fiber, and a light weight formed body was produced similar to Comparative Example 3.

The properties examination results of both formed bodies are shown in Table 13.

Table 13

| | | Example 29 | Comparative Example 4 |
|---|---|---|---|
| Composition (wt. Part) | Surface-Reformed Slag | 100 | 0 |
| | Calcium Silicate Hydrate (Xonotlite) | 0 | 100 |
| | Synthetic Pulp | 10 | 10 |
| | Glass Fiber | 5 | 5 |
| Properties | Bulk Specific Gravity ($g/cm^3$) | 0.50 | 0.48 |
| | Bending Strength ($kgf/cm^2$) | 71 | 60 |
| | Processibility | ○ | ○ |
| | Combustibility | incombustible | incombustible |

The examination results show that the formed body using the surface-reformed slag is excellent in strength properties compared with the formed body using xonotlite.

Example 30-32

To 100 parts by weight of the same surface-reformed slag as Example 1, synthetic pulp (SWP-E790, manufactured by Mitsui Petrochemical Industries Co., Ltd.), polymer dispersion (styrene-butadiene copolymer latex, Nipol

LX-438C, manufactured by Nippon Zeon Co., Ltd.), glass fiber (chopped strand of E glass, 13 mm in length, manufactured by Nitto Boseki Co., Ltd.) were added in the rate shown in Table 14, and the light weight formed bodies were produced similarly.

The properties examination results of the obtained formed bodies are shown in Table 14.

Table 14

| | | Example29 | Example30 | Example31 | Example32 |
|---|---|---|---|---|---|
| Composition (wt. part) | Surface-Reformed Slag | 100 | 100 | 100 | 100 |
| | Synthetic Pulp | 10 | 5 | 10 | 15 |
| | Polymer Dispersion(SBR) | 0 | 5 | 10 | 15 |
| | Glass Fiber | 5 | 5 | 5 | 5 |
| Properties | Bulk Specific Gravity ($g/cm^3$) | 0.50 | 0.50 | 0.50 | 0.50 |
| | Bending Strength ($kgf/cm^2$) | 71 | 79 | 91 | 97 |
| | Processibility | ○ | ○ | ○ | ○ |
| | Combustibility | in-combustible | in-combustible | in-combustible | combustible |

The examination results show that, the improvement in strength is possible by blending synthetic pulp and polymer dispersion, and though it is different according to actual blend, in general, the combined quantity is desirably less than 20 % in view of combustibility.

Example 33

To the blend of Example 30, 0.5 part by weight (0.5 part by weight to 1 part by weight of the polymer dispersion) of a cationic coagulant (SUNFLOC C454, manufactured by Sanyo Chemical Ind. Ltd.) was added, and the contaminated state of drainage with the polymer was compared with Example 30 through forming by press dehydrating.

A small quantity of the polymer contamination was observed in the drainage in Example 30 (no coagulant was added), whereas it was not observed in Example 33 (a coagulant was added).

Thus, by using a coagulant, water filterability (dehydration ability) could be improved through forming, and the drainage treatment could be facilitated.

Examples 34-36

A light weight aggregate (Shirasu balloon, bulk density : 0.24, manufactured by Sanki Kogyo K.K.) was added to the blend of Example 33 in the rate shown in Table 15, and the light weight formed bodies were produced similarly.

The properties examination results of the produced formed bodies are shown in Table 15.

Table 15

| | | Example33 | Example34 | Example35 | Example36 |
|---|---|---|---|---|---|
| Composition (wt. part) | Surface-Reformed Slag | 100 | 100 | 100 | 100 |
| | Synthetic Pulp | 5 | 5 | 5 | 5 |
| | Polymer Dispersion(SBR) | 5 | 5 | 5 | 5 |
| | Glass Fiber | 5 | 5 | 5 | 5 |
| | Coagulant | 0.5 | 0.5 | 0.5 | 0.5 |
| | Light Weight Aggregate (Shirasu Balloon) | 0 | 10 | 30 | 60 |
| Properties | Bulk Specific Gravity ($g/cm^3$) | 0.50 | 0.48 | 0.45 | 0.41 |
| | Bending Strength ($kgf/cm^2$) | 78 | 80 | 65 | 54 |
| | Processibility | ○ | ○ | ○ | △ |
| | Combustibility | in-combustible | in-combustible | in-combustible | in-combustible |

The examination results show that the formed body can be made lighter by blending a light weight aggregate, and the blending quantity is preferably less than 60 % in view of processibility.

Example 37

On the basis of the blend of Example 34, a coloring test of the formed body by pigments was conducted. The pigments used were 4 kinds (all manufactured by Dainichi Seika K.K.), i.e. yellow (Ti-Sb-Ni), brown (Fe-Zn), green (Ti-Zn-Ni-Co) and blue (Co-Al-Zn), of dipyroxide color.

The surface-reformed slag has a good adsorptivity, and

color unevenness did not occur and uniform coloring was possible.

Example 38

The surface-reformed slag having a BET specific surface area of 100 $m^2/g$ prepared in Examples 25-28 was dehydrated under heating at 450 °C for 4 hours to obtain the surface-reformed slag of which the BET specific surface area was improved up to 120 $m^2/g$.

Using the above surface-reformed slag of 120 $m^2/g$, the light weight formed body was produced similar to Example 33.

The properties examination results are shown in Table 16 and Figure 7.

Table 16

| | | Example 38 | Comparative Example (Example 33) |
|---|---|---|---|
| Composition (wt. Part) | Surface-Reformed Slag (120 $m^2/g$) | 100 | 0 |
| | Surface-Reformed Slag (100 $m^2/g$) | 0 | 100 |
| | Synthetic Pulp | 5 | 5 |
| | Polymer | 5 | 5 |
| | Glass Fiber | 5 | 5 |
| | Coagulant | 0.5 | 0.5 |
| Properties | Bulk Specific Gravity ($g/cm^3$) | 0.47 | 0.50 |
| | Bending Strength ($kgf/cm^2$) | 80 | 78 |
| | Processibility | ○ | ○ |
| | Combustibility | in-combustible | incombustible |

The measured results of the moisture absorption-desorption properties of the light weight formed body of this Example (A) and that of Example 33 (B) are shown in Figure 7. The moisture absorption curve was obtai: .d by measuring the weight variation with time when RH

was elevated from 50 % to 90 % at 20°C, and the moisture desorption curve was obtained by measuring the weight variation with time when RH was lowered from 90 % to 50 % at 20°C conversely.

The results of Table 16 and Figure 7 show that the improvement in the specific strength (strength/specific gravity) and in the moisture absorption-desorption properties is possible by using the surface-reformed slag of 120 $m^2/g$.

Examples 39-41, Comparative Examples 5,6

The surface-reformed slag produced in Examples 1-4 and the calcium silicate hydrate (xonotlite) produced in Comparative Example 1 were mixed in the rate shown in Table 17, and 10 parts by weight (as the solid matter) of a polymer dispersion (styrene-butadiene copolymer latex, Nipol LX-438C, manufactured by Nippon Zeon, Co., Ltd.) and water were added thereto, and then kneaded. The slurry was poured into a mod form, and formed with gradual dehydration by pressing. The formed bodies were dried at 60°C for 15 hours and then at 110°C for 5 hours to obtain the light weight formed bodies shown in Figure 1.

The properties examination results are shown in Table 17 and Figure 8.

Table 17

| | | | Comparative5 | Example39 | Example40 | Example41 | Comparative6 |
|---|---|---|---|---|---|---|---|
| Composition (wt. part) | Surface-Reformed Slag | | 100 | 70 | 50 | 30 | 0 |
| | Calcium Silicate Hydrate (Xonotlite) | | 0 | 30 | 50 | 90 | 100 |
| | Polymer Dispersion (SBR) | | 10 | 10 | 10 | 10 | 10 |
| Properties | Bulk Specific Gravity ($g/cm^3$) | | 0.50 | 0.50 | 0.50 | 0.50 | 0.50 |
| | Bending Strength ($kgf/cm^2$) | | 21 | 21 | 18 | 17 | 16 |
| | Processibility | | ○ | ○ | ○ | ○ | ○ |
| | Combustibility | | incombustible | in-combustible | in-combustible | in-combustible | incombustible |
| | Variation Rate in Length (%) | Dried | -0.078 | -0.071 | -0.060 | -0.048 | -0.041 |
| | | Water-Absorbed | +0.105 | +0.084 | +0.067 | +0.052 | +0.033 |
| | Water Filter-ability (sec.) | | 820 | 710 | 650 | 630 | 610 |

The measured results of the moisture absorption-desorption properties of respective light weight formed bodies of Example 39 (B), Example 40 (C), Example 41 (D), Comparative Example 5 (A) and Comparative Example 6 (E) are shown in Figure 8. The moisture absorption curve was obtained by measuring the weight variation with time when RH was elevated from 50 % to 90 % at 20 °C, and the moisture desorption curve was obtained by measuring the weight

variation with time when RH was lowered from 90 % to 50 % at 20°C conversely.

The results of Table 17 and Figure 8 show that the surface-reformed slag was very excellent in hygroscopic property and water absorptivity, and it exhibits excellent moisture absorption-desorption properties. While, though the variation rate in length and water-filtering time are slightly greater than xonotlite, when the requirements for dimensional stability and forming ability are great, they can be improved by mixing xonotlite. Since the moisture absorption-desorption properties reduce by mixing xonotlite, the mixing rate of the surface-reformed slag and xonotlite may be determined according to the required properties.

Example 42

To the blend of Example 39, an aqueous suspension of 5 parts by weight of glass fiber (chopped strand of E glass, 13 mm in length, manufactured by Nitto Boseki Co., Ltd.), and the light weight formed body was produced similarly.

The properties examination results of the formed body are shown in Table 18 in comparison with Comparative Example 2.

Table 18

| | | Example 42 | Comparative Example 2 |
|---|---|---|---|
| Composition (wt. Part) | Surface-Reformed Slag | 70 | 0 |
| | Calcium Silicate Hydrate (Xonotlite) | 30 | 100 |
| | Polymer Dispersion (SBR) | 10 | 10 |
| | Glass Fiber | 5 | 5 |
| Properties | Bulk Specific Gravity ($g/cm^3$) | 0.50 | 0.50 |
| | Bending Strength ($kgf/cm^2$) | 78 | 69 |
| | Processibility | ○ | ○ |
| | Combustibility | in-combustible | incombusible |

The results of Table 18 show that the mixture of the surface-reformed slag and xonotlite is superior in strength properties.

<u>Example 43</u>

To the blend of Example 42, 0.5 part by weight (0.1 part by weight to 1 part by weight of the polymer dispersion) of a cationic coagulant (SUNFLOC C454, manufactured by Sanyo Chemical Ind. Ltd.) was added, and the

contaminated state of drainage with the polymer was compared with Example 42 through forming by press dehydrating.

A small quantity of the polymer contamination was observed in the drainage in Example 42 (no coagulant was added), whereas it was not observed in Example 43 (a coagulant was added).

Thus, by using a coagulant, water filterability (dehydration ability) could be improved through forming, and the drainage treatment could be facilitated.

Example 44

In the blend of Example 43, the polymer dispersion was changed to 5 parts by weight, and an aqueous suspension of 5 parts by weight of polyethylene synthetic pulp (SWP-E790, manufactured by Mitsui Petrochemical Industries Co., Ltd.) and 0.5 part by weight of a cationic coagulant, and the light weight formed body was produced similarly.

Comparative Example 7

In the blend of Example 43, the polymer dispersion was changed to 5 parts by weight, and the same aqueous suspension of 5 parts by weight of the polyethylene synthetic pulp and 0.5 part by weight of the cationic coagulant, and the light weight formed body was produced similarly.

The properties examination results of both formed bodies are shown in Table 19.

Table 19

| | | Example 44 | Comparative Example 7 |
|---|---|---|---|
| Composition (wt. Part) | Surface-Reformed Slag | 70 | 0 |
| | Calcium Silicate Hydrate (Xonotlite) | 30 | 100 |
| | Polymer Dispersion (SBR) | 5 | 5 |
| | Synthetic Pulp | 5 | 5 |
| | Glass Fiber | 5 | 5 |
| | Coagulant | 0.5 | 0.5 |
| Properties | Bulk Specific Gravity ($g/cm^3$) | 0.50 | 0.50 |
| | Bending Strength ($kgf/cm^2$) | 76 | 65 |
| | Processibility | ○ | ○ |
| | Combustibility | incombustible | incombustible |

The results of Table 19 show that the mixture of the surface-reformed slag and xonotlite is superior in strength properties.

Examples 45-47

To the blend of Example 45, light weight aggregate (shirasu balloon, bulk density : 0.24, manufactured by Sanki

Kogyo K.K.) was added in the rate shown in Tabel 20, and the formed body was produced similarly.

The properties examination results of the produced formed body are shown in Table 20.

Table 20

| | | Example44 | Example45 | Example46 | Example47 |
|---|---|---|---|---|---|
| Composition (wt. part) | Surface-Reformed Slag | 70 | 70 | 70 | 70 |
| | Calcium Silicate Hydrate (Xonotlite) | 30 | 30 | 30 | 30 |
| | Polymer Dispersion(SBR) | 5 | 5 | 5 | 5 |
| | Synthetic Pulp | 5 | 5 | 5 | 5 |
| | Glass Fiber | 5 | 5 | 5 | 5 |
| | Coagulant | 0.5 | 0.5 | 0.5 | 0.5 |
| | Light Weight Aggregate (Shirasu Balloon) | 0 | 10 | 30 | 60 |
| Properties | Bulk Specific Gravity ($g/cm^3$) | 0.50 | 0.48 | 0.45 | 0.41 |
| | Bending Strength ($kgf/cm^2$) | 76 | 75 | 61 | 50 |
| | Processibility | ○ | ○ | ○ | △ |
| | Combustibility | in-combustible | in-combustible | in-combustible | incombustible |

The examination results show that the formed body can be made lighter by blending light weight aggregate. In view of processibility, the blending quantity is preferably less than 60 %.

Example 48

On the basis of the blend of Example 45, a coloring test of the formed body by pigments was conducted. The pigments used were 4 kinds (all manufactured by Dainichi Seika K.K.), i.e. yellow (Ti-Sb-Ni), brown (Fe-Zn), green (Ti-Zn-Ni-Co) and blue (Co-Al-Zn), of dipyroxide color.

The surface-reformed slag has a good adsorptivity, and color unevenness did not occur and uniform coloring was possible.

Example 49, Comparative Example 8

The surface-reformed slag having a BET specific surface area of 100 $m^2/g$ prepared in Examples 1-4 was dehydrated under heating at 450 °C for 4 hours to obtain the surface-reformed slag for which the BET specific surface area was improved up to 120 $m^2/g$.

Using the above surface-reformed slag of 120 $m^2/g$, the light weight formed body was produced similar to Example 44.

The properties examination resutls are shown in Table 21 and Figure 9.

Table 21

| | | Example 49 | Comparative Example 8 (Example 44) |
|---|---|---|---|
| Composition (wt. Part) | Surface-Reformed Slag (120 $m^2/g$) | 70 | |
| | Surface-Reformed Slag (100 $m^2/g$) | | 90 |
| | Calcium Silicate Hydrate (Xonotlite) | 30 | 30 |
| | Polymer Dispersion(SBR) | 5 | 5 |
| | Synthetic Pulp | 5 | 5 |
| | Glass Fiber | 5 | 5 |
| | Coagulant | 0.5 | 0.5 |
| Properties | Bulk Specific Gravity ($g/cm^3$) | 0.47 | 0.50 |
| | Bending Strength ($kgf/cm^2$) | 79 | 76 |
| | Processibility | ○ | ○ |
| | Combustibility | in-combustible | incombustible |

The results of the moisture absorption-desorption properties of the light weight formed body of Example 49 (F) measured similar to the light weight formed body of

Comparative Example 8 (G) is shown in Figure 9 together.

The results of Table 21 and Figure 9 show that the improvement in the specific strength (strength/specific gravity) and in the moisture absorption-desorption properties is possible by using the surface-reformed slag of 120 $m^2/g$.

Examples 50-55

Glassy blast furnace slag was ground up to a Blaine specific surface area of 4,500 $cm^2/g$ by a ball mill, and classified as the raw material for classification by an air classifier to obtain a pulverized slag having a Blaine specific surface area of 14,000 $cm^2/g$.

The pulverized slag was added to NaOH solution 3 normal in concentration at a temperature of 90°C at a rate of 5 g per 100 ml thereof, and treated with stirring for 3 hours to obtain the surface-reformed slag of a BET specific surface area of 100 $m^2/g$. The surface-reformed slag was sufficiently washed with water to remove alkali materials and dried, and used as the raw material for producing the formed body.

To 100 parts by weight of the surface-reformed slag, calcined gypsum (manufactured by Yoshino Sekko) was added at a rate shown in Table 22, and an aqueous suspension of 10 parts by weight (as the solid matter) of a polymer dispersion (styrene-butadiene copolymer latex, Nipol LX-438C, manufactured by Nippon Zeon Co., Ltd.) and 5 parts

by weight of glass fiber (chopped strand of E glass, 13 mm in length manufactured by Nitto Boseki Co., Ltd.) was further added, and then kneaded. The slurry was poured in a mold form, and formed with gradual dehydration by pressing. This formed body was dried at 60°C for 15 hours and then at 110°C for 5 hours to obtain the light weight formed.

The properties examination results are shown in Table 22.

Table 22

| | | Example50 | Example51 | Example52 | Example53 | Example54 | Example55 | Comparative (Example 9) | Comparative2 |
|---|---|---|---|---|---|---|---|---|---|
| Composition (wt. part) | Surface-Reformed Slag | 100 | 100 | 100 | 100 | 100 | 100 | 100 | 0 |
| | Calcium Silicate Hydrate (Xonotlite) | 0 | 0 | 0 | 0 | 0 | 0 | 0 | 100 |
| | Calcined Gypsum | 10 | 30 | 50 | 70 | 100 | 150 | 0 | 0 |
| | Polymer Dispersion(SBR) | 10 | 10 | 10 | 10 | 10 | 10 | 10 | 10 |
| | Glass Fiber | 5 | 5 | 5 | 5 | 5 | 5 | 5 | 5 |
| Properties | Bulk Specific Gravity ($g/cm^3$) | 0.50 | 0.50 | 0.50 | 0.50 | 0.50 | 0.50 | 0.50 | 0.50 |
| | Bending Strength ($kgf/cm^2$) | 85 | 92 | 101 | 94 | 88 | 72 | 82 | 69 |
| | Processibility | ○ | ○ | ○ | ○ | ○ | △ | ○ | ○ |
| | Combustibility | incombustible | incombustible | incombustible | incombustible | incombustible | incombustible | incombustible | incombustible |

The results of Table 22 show that, by blending calcined gypsum, it is possible to improve strength of the light weight formed body without reducing the processibility and the incombustibility.

Example 56

To the blend of Example 52, 1 part by weight (0.1 part by weight to 1 part by weight of the polymer dispersion) of a cationic coagulant (SUNFLOC C454, manufactured by Sanyo Chemical Ind. Ltd.) was added, and the contaminated state of drainage with the polymer was compared with Example 52 through forming by press dehydrating.

A small quantity of the polymer contamination was observed in the drainage in Example 52 (no coagulant was added), whereas it was not observed in Example 56 (a coagulant was added).

Thus, by using a coagulant, water filterability (dehydration ability) could be improved through forming, and the drainage treatment could be facilitated.

Example 57-59

To the same aqueous suspension as Examples 50-55 of 100 parts by weight of the surface-reformed slag, 50 parts by weight of the calcined gypsum and 5 parts by weight of the glass fiber, the polymer dispersion and the cationic coagulant were added varying the blending quantities as shown in Table 23, and the light weight formed bodies were

produced similarly.

The properties examination results of the obtained formed bodies are shown in Table 23.

Table 23

| | | Example57 | Example58 | Example59 | Comparative9 |
|---|---|---|---|---|---|
| Composition (wt. part) | Surface-Reformed Slag | 100 | 100 | 100 | 100 |
| | Calcined Gypsum | 50 | 50 | 50 | 0 |
| | Polymer Dispersion(SBR) | 10 | 7 | 5 | 10 |
| | Glass Fiber | 5 | 5 | 5 | 5 |
| | Coagulant | 1.0 | 0.7 | 0.5 | 1.0 |
| Properties | Bulk Specific Gravity ($g/cm^3$) | 0.50 | 0.50 | 0.50 | 0.50 |
| | Bending Strength ($kgf/cm^2$) | 102 | 89 | 76 | 81 |
| | Processibility | ○ | ○ | ○ | ○ |
| | Combustibility | in-combustible | in-combustible | in-combustible | in-combustible |

Comparative Example 9

In the blend of Example 57, the calcined gypsum was not added, and produced a formed body similarly.

The results of Table 23 show that, by adding gypsum, when polymer dispersion is decreased, the strength equivalent to the no blending product can be secured.

Example 60

To the blend of Example 59, an aqueous suspension of 5 parts by weight of polyethylene synthetic pulp (SWP-E790, manufactured by Mitsui Petrochemical Industries Co., Ltd.)

was added, and the light weight formed body was produced similarly.

The properties examination results of the obtained formed body are shown in Table 24.

Table 24

| | | Example 60 | Comparative Example (Example 57) |
|---|---|---|---|
| Composition (wt. Part) | Surface-Reformed Slag | 100 | 100 |
| | Calcined Gypsum | 50 | 50 |
| | Polymer Dispersion (SBR) | 5 | 10 |
| | Synthetic Pulp | 5 | 0 |
| | Glass Fiber | 5 | 5 |
| | Coagulant | 0.5 | 1 |
| Properties | Bulk Specific Gravity ($g/cm^3$) | 0.50 | 0.50 |
| | Bending Strength ($kgf/cm^2$) | 96 | 102 |
| | Processibility | 0 | 0 |
| | Combustibility | incombustible | incombustible |
| Particle Size Distribution of Scraped Dust (wt %) | +1190 µm | 45 | 10 |
| | 590-1190 µm | 11 | 12 |
| | 297-590 µm | 10 | 29 |
| | -298 µm | 34 | 49 |
| Specular Gloss Gs(75°) | | 40 | 23 |

The results of Table 24 show that, by adding synthetic pulp, to reduce dusting through the processing and to improve the surface gloss are possible.

Example 61

In the blend of Example 60, the surface-reformed slag was 70 parts by weight, and the calcium silicate hydrate (xonotlite) produced in Comparative Example 1 was 30 parts by weight, and the light weight formed body was produced similarly.

The properties examination results of the obtained formed body are shown in Table 25.

Table 25

| | | | Example 61 | Comparative Example (Example 60) |
|---|---|---|---|---|
| Composition (wt. Part) | Surface-Reformed Slag | | 70 | 100 |
| | Calcium Silicate Hydrate (Xonotlite) | | 30 | 0 |
| | Calcined Gypsum | | 50 | 50 |
| | Polymer Dispersion (SBR) | | 5 | 5 |
| | Synthetic Pulp | | 5 | 5 |
| | Glass Fiber | | 5 | 5 |
| | Coagulant | | 0.5 | 0.5 |
| Properties | Bulk Specific Gravity ($g/cm^3$) | | 0.50 | 0.50 |
| | Bending Strength ($kgf/cm^2$) | | 95 | 96 |
| | Processibility | | ○ | ○ |
| | Combustibility | | incombustible | incombustible |
| | Variation Rate in Length (%) | Dried | -0.064 | -0.072 |
| | | Water-Absorbed | +0.077 | +0.097 |
| Water Filterability (sec.) | | | 720 | 860 |

The results of Table 25 show that a part of the surface-reformed slag can be replaced by xonotlite in order to improve the dimensional stability and the formability.

Examples 62-64

To the blend of Example 61, light weight aggregate (shirasu balloon, bulk density : 0.24, manufactured by Sanki Kogyo K.K.) was added at a rate shown in Table 26, and the formed bodies were produced similarly.

The properties examination results are shown in Table 26.

Table 26

| | | Comparative (Example61) | Example62 | Example63 | Example64 |
|---|---|---|---|---|---|
| Composition (wt. part) | Surface-Reformed Slag | 70 | 70 | 70 | 70 |
| | Calcium Silicate Hydrate (Xonotlite) | 30 | 30 | 30 | 30 |
| | Light Weight Aggregate (Shirasu Balloon) | 0 | 10 | 30 | 50 |
| | Calcined Gypsum | 50 | 50 | 50 | 50 |
| | Polymer Dispersion(SBR) | 5 | 5 | 5 | 5 |
| | Synthetic Pulp | 5 | 5 | 5 | 5 |
| | Glass Fiber | 5 | 5 | 5 | 5 |
| | Coagulant | 0.5 | 0.5 | 0.5 | 0.5 |
| Properties | Bulk Specific Gravity ($g/cm^3$) | 0.50 | 0.48 | 0.45 | 0.41 |
| | Bending Strength ($kgf/cm^2$) | 95 | 92 | 80 | 61 |
| | Processibility | ○ | ○ | ○ | △ |
| | Combustibility | in-combustible | in-combustible | in-combustible | in-combustible |

The results of Table 26 show that, by blending light weight aggregate, the formed body can be made lighter and the heat-insulating ability can be improved. In view of processibility, the blending quantity is preferably less than 50 %.

Example 65

On the basis of the blend of Example 62, a coloring test of the formed body by pigments was conducted. The pigments used were 4 kinds (all manufactured by Dainichi Seika K.K.), i.e. yellow (Ti-Sb-Ni), brown (Fe-Zn), green (Ti-Zn-Ni-Co) and blue (Co-Al-Zn), of dipyroxide color.

The surface-reformed slag has a good adsorptivity, and color unevenness did not occur and uniform coloring was possible.

Example 66

The surface-reformed slag having a BET specific surface area of 100 $m^2/g$ prepared in Examples 50-55 was dehydrated under heating at 450 °C for 4 hours to obtain the surface-reformed slag of which the BET specific surface area was improved up to 120 $m^2/g$.

Using the above surface-reformed slag of 120 $m^2/g$, the light weight formed body was produced similar to Example 61.

The properties examination results are shown in Table 27 and Figure 10.

Table 27

| | | Example 66 | Comparative Example (Example 61) |
|---|---|---|---|
| Composition (wt. Part) | Surface-Reformed Slag (120 $m^2/g$) | 70 | |
| | Surface-Reformed Slag (100 $m^2/g$) | | 70 |
| | Calcium Silicate Hydrate (Xonotlite) | 30 | 30 |
| | Calcined Gypsum | 50 | 50 |
| | Polymer Dispersion | 5 | 5 |
| | Synthetic Pulp | 5 | 5 |
| | Glass Fiber | 5 | 5 |
| | Coagulant | 0.5 | 0.5 |
| Properties | Bulk Specific Gravity ($g/cm^3$) | 0.47 | 0.50 |
| | Bending Strength ($kgf/cm^2$) | 98 | 95 |
| | Processibility | ○ | ○ |
| | Combustibility | in-combustible | incombustible |

The measured results of the moisture absorption-desorption properties of the light weight formed

body of this Example (A) and that of Example 61 (B) are shown in Figure 10. The moisture absorption curve was obtained by measuring the weight variation with time when RH was elevated from 50 % to 90 % at 20°C, and the moisture desorption curve was obtained by measuring the weight variation with time when RH was lowered from 90 % to 50 % at 20°C conversely.

The results of Table 27 and Figure 10 show that the improvement in the specific strength (strength/specific gravity) and in the moisture absorption-desorption properties is possible by using the surface-reformed slag of 120 $m^2/g$.

Example 67

To 100 parts by weight of the surface-reformed slag having a BET specific surface area of 100 $m^2/g$, 10 parts by weight as the solid matter of ethylene-vinyl acetate (EVA) (MOWITON J, manufactured by Hoechst Gosei Co., Ltd.) as the polymer dispersion, 5 parts by weight of E glass fiber (chopped strand, 25 mm) and 300 parts by weight of water were added, and then kneaded. 0.10 part by weight of SUNFLOC C454 (manufactured by Sanyo Chemical Ind. Ltd.) per 1 part by weight of the polymer dispersion was further added as the coagulant, and forming was conducted by press dehydration. The formed body was dried at 60°C for 15 hours and then at 110°C for 5 hours to obtain the light weight formed body having a bulk density of 0.50 $g/cm^3$. The

properties are shown in Table 28 in comparison with a commercial artificial wood (xonotlite group, trade name : WOODYCERAM, manufactured by Ube Industries Ltd.) as a reference material.

Table 28

| | Example 67 | Comparative | Remarks |
|---|---|---|---|
| Bulk Specific Gravity ($g/cm^3$) | 0.50 | 0.50 | |
| Bending Strength ($kgf/cm^2$) | 80 | 66 | JIS A 1106 |
| Water Absorption Amount ($g/cm^2$) | 0.55 | 0.54 | JIS A 2104 Water absorption for 24 hours |
| Resistance to Taking Out of Nail (kgf/cm) | 10 | 10 | JIS Z 2121 |
| BET Specific Surface Area | 100 $m^2/g$ | 30 $m^2/g$ | |

The measured results of the moisture absorption-desorption properties of the product of Example 67 (A), a comparative product (B) being a commercial product and another comparative product being Japanese cypress are

shown in Figure 11. It is seen that the light weight formed body produced by the method of the invention has a moisture controlling ability near Japanese cypress.

Example 68

To 100 parts by weight of the surface-reformed slag having a BET specific surface area of 100 $m^2/g$, 10 parts by weight of polyethylene synthetic pulp (trade name : SWP-E790 [manufactured by Mitsui Petrochemical Industries Co., Ltd.] ), 3.0 parts by weight of glass fiber and 400 parts by weight of water were added, and then kneaded 0.1 part by weight of a coagulant (SUNFLOC C454 [manufactured by Sanyo Chemical Ind. Ltd.]) was added thereto, and forming was conducted by press dehydration. The formed body was heated at 110°C for 15 hours.

Subsequently, to the above blend (Example 68), 5 parts by weight of a polymer dispersion (styrene-butadiene copolymer emulsion, Nipol LX-438C [Nippon Zeon Co., Ltd.]) was further added (Example 69), and the light weight formed body was produced similarly.

A comparison of the property values of the light weight formed body of the invention with an artificial wood (WOODYCERAM of Ube) is shown in Table 29.

The evaluation of the properties was conducted by a particle size distribution of cutting dust by a cutter for wood (% of each particle size divided by using standard sieves) and by a glossiness according to JIS Z 8741-1962.

Table 29

| | Particle Size Distribution of Cutting Dust (μm) | | | | Amount of Hygroscopic Water* ($g/cm^3$) | Specular Gloss Gs (75°) |
|---|---|---|---|---|---|---|
| | +1190 | 1190–590 | 590–297 | –297 | | |
| Example 68 | 58 | 16 | 9 | 17 | 0.55 | 62 |
| Example 69 | 62 | 15 | 8 | 15 | 0.52 | 53 |
| Comparative | 2 | 7 | 30 | 58 | 0.54 | 18 |

* The amount of hydgroscopic water was JIS A 2104–1957 (water absorption for 24 hours)

The above results show that, by adding synthetic pulp, the effect to prevent dusting and to improve surface gloss are obtained.

Industrial Applicability

The light weight formed body of the invention is superior to the conventional product using needle like calcium silicate hydrate such as xonotlite particularly in moisture controlling functions due to the fundamental difference in properties and states, in spite of using a reformed product of inexpensive blast furnace slag. It is easily presumed that the influence as inorganic powder upon health is substantially none. Since the surface-reformed slag has more crystallization water than xonotlite, autolysis can be expected. Moreover, the processibility such as cutting, scraping and nailing is excellent, and the formed body also has the characteristics such as incombustibility, rare occurrence of dimentional change and no possibility of rot and degradation. Besides, when synthetic pulp is added, processibility is further excellent, and dusting during processing reduces. Furthermore, surface glossiness is excellent, and the water filterability during processing to form the formed body is improved. When a calcium silicate hydrate having a high needle property of which the quantity of crystallization water is small such as xonotlite is added, heat resistance, dimensional stability, water filterability during forming and the like are improved. When gypsum is added, strength such as bending strength rises without inducing problems such as decrease of incombustibility.

CLAIMS

1. A light weight formed body comprising a powder produced by reforming a glassy blast furnace slag powder with an alkali aqueous solution through the dissolution reaction and the hydration reaction of glass or a powder produced by dehydrating with heating the above powder and a polymer dispersion.

2. The light weight formed body of claim 1 which further comprises one or more kinds selected form a reinforcing fiber, a coagulant, a light weight aggregate, a thickener, a dispersing agent and a pigment.

3. A weight formed body comprising a powder produced by reforming a glassy blast furnace slag powder with an alkali aqueous solution through the dissolution reaction and the hydration reaction of glass or a powder produced by dehydrating with heating the above powder and a synthetic pulp.

4. The light weight formed body of claim 3 which further comprises one or more kinds selected from a reinforcing fiber, a polymer dispersion, a coagulant, a light weight aggregate, a thickener, a dispersing agent and a pigment.

5. A light weight formed body comprising a powder produced

by reforming a glassy blast furnace slag powder with an alkali aqueous solution through the dissolution reaction and the hydration reaction of glass or a powder produced by dehydrating with heating the above powder, a needle- to fiber-shaped calcium silicate hydrate and a polymer dispersion.

6. The light weight formed body of claim 5 which further comprises one or more kinds selected from a reinforcing fiber, a coagulant, a synthetic pulp, a light weight aggregate, a thickener, a dispersing agent and a pigment.

7. A light weight formed body comprising a powder produced by reforming a glassy blast furnace slag powder with an alkali aqueous solution through the dissolution reaction and the hydration reaction of glass or a powder produced by dehydrating with heating the above powder, a hydraulic gypsum and a polymer dispersion.

8. The light weight formed body of claim 7 which further comprises one or more kinds selected from a reinforcing fiber, a coagulant, a synthetic pulp, a needle- to fiber-shaped calcium silicate hydrate, a light weight aggregate, a thickener, a dispersing agent and a pigment.

9. A process for producing a light weight formed body which comprises adding a polymer dispersion, a reinforcing fiber

and water to a powder produced by reforming a glassy blast furnace slag powder with an alkali aqueous solution through the dissolution reaction and the hydration reaction of glass, kneading, further adding a coagulant, conducting forming it by press dehydration, and drying.

10. The process for producing a light weight formed body of claim 9 wherein the blending amount of the polymer dispersion is 3-20 % of the weight of the alkali-reformed slag.

11. The process for producing a light weight formed body of claim 9 wherein the blending amount of the reinforcing fiber is 2-10 % of the weight of the alkali-reformed slag.

12. A process for producing a light weight formed body which comprises adding a synthetic pulp, a reinforcing fiber and water to a powder produced by reforming a glassy blast furnace slag powder with an alkali aqueous solution through the dissolution reaction and the hydration reaction of glass, kneading, further adding a coagulant, conducting forming it by press dehydration, and drying.

13. A process for producing a light weight formed body which comprises adding a synthetic pulp, a reinforcing fiber, a polymer dispersion, and water to a powder produced by reforming a glassy blast furnace slag powder with an alkali

aqueous solution through the dissolution reaction and the hydration reaction of glass, kneading, furhter adding a coagulant, conducting forming it by press dehydration, and drying.

FIG.1

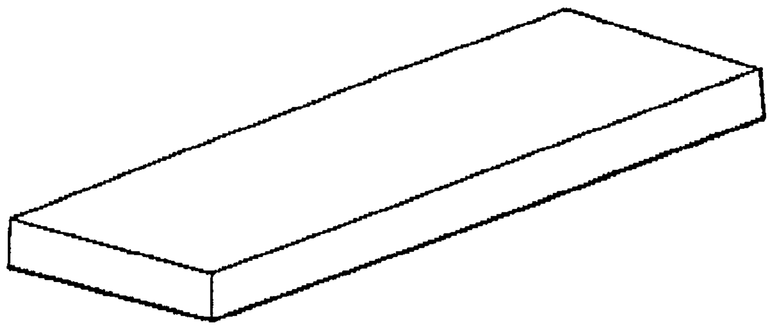

FIG.2

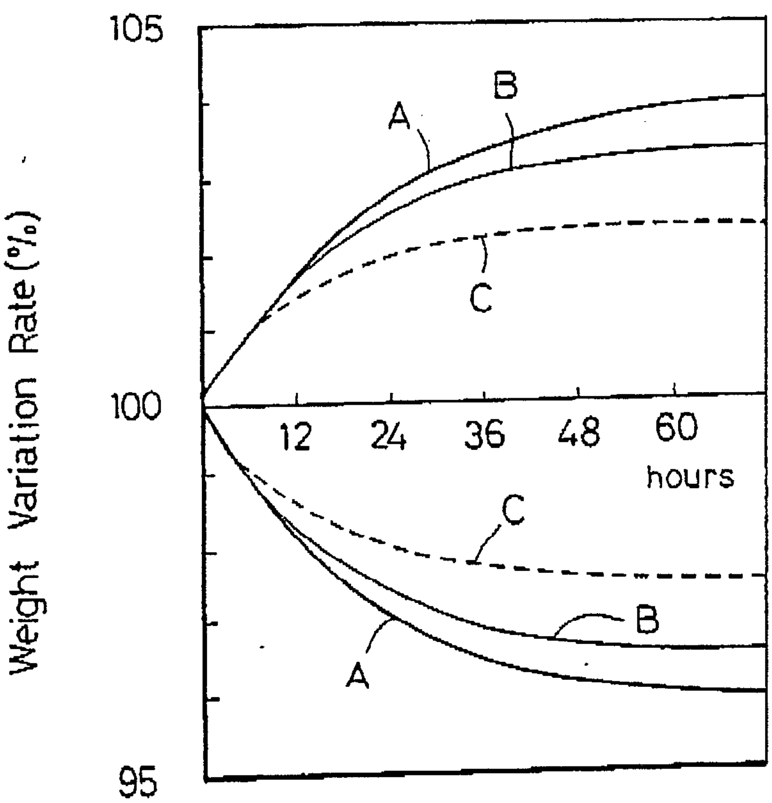

FIG. 3

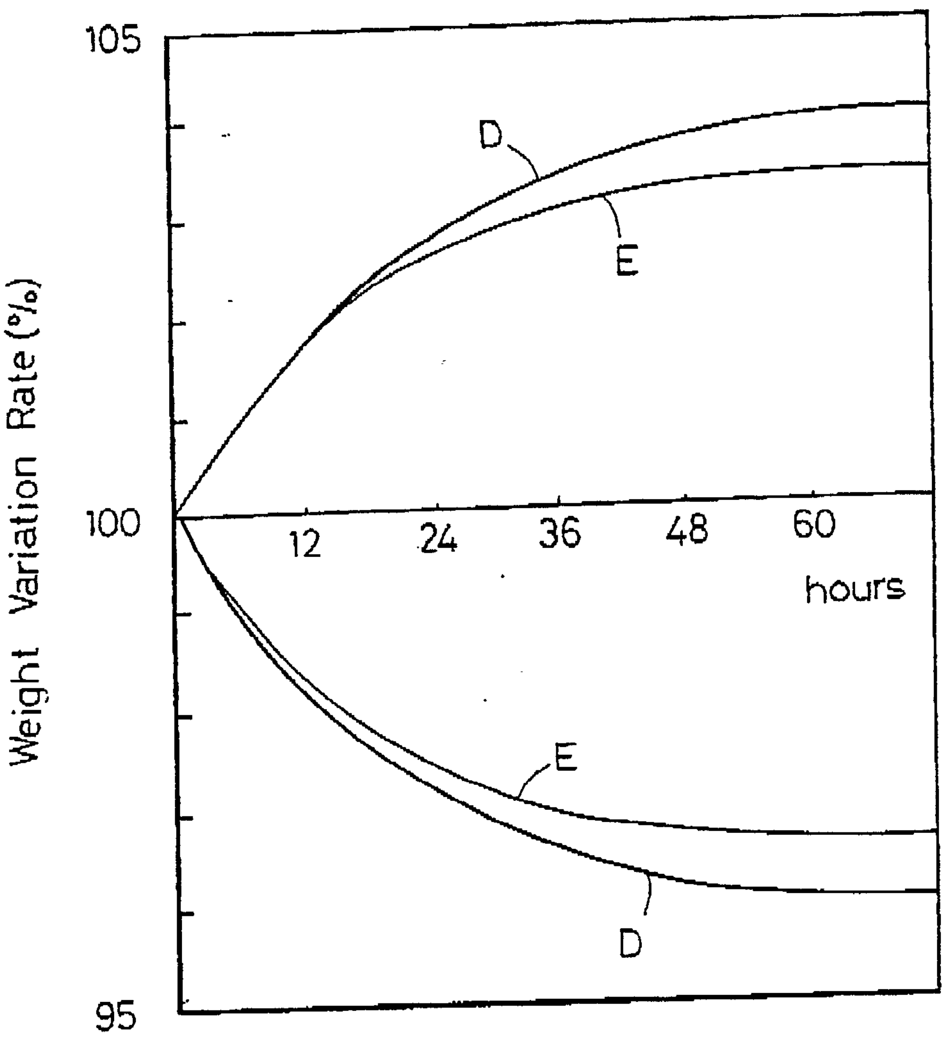

FIG.4

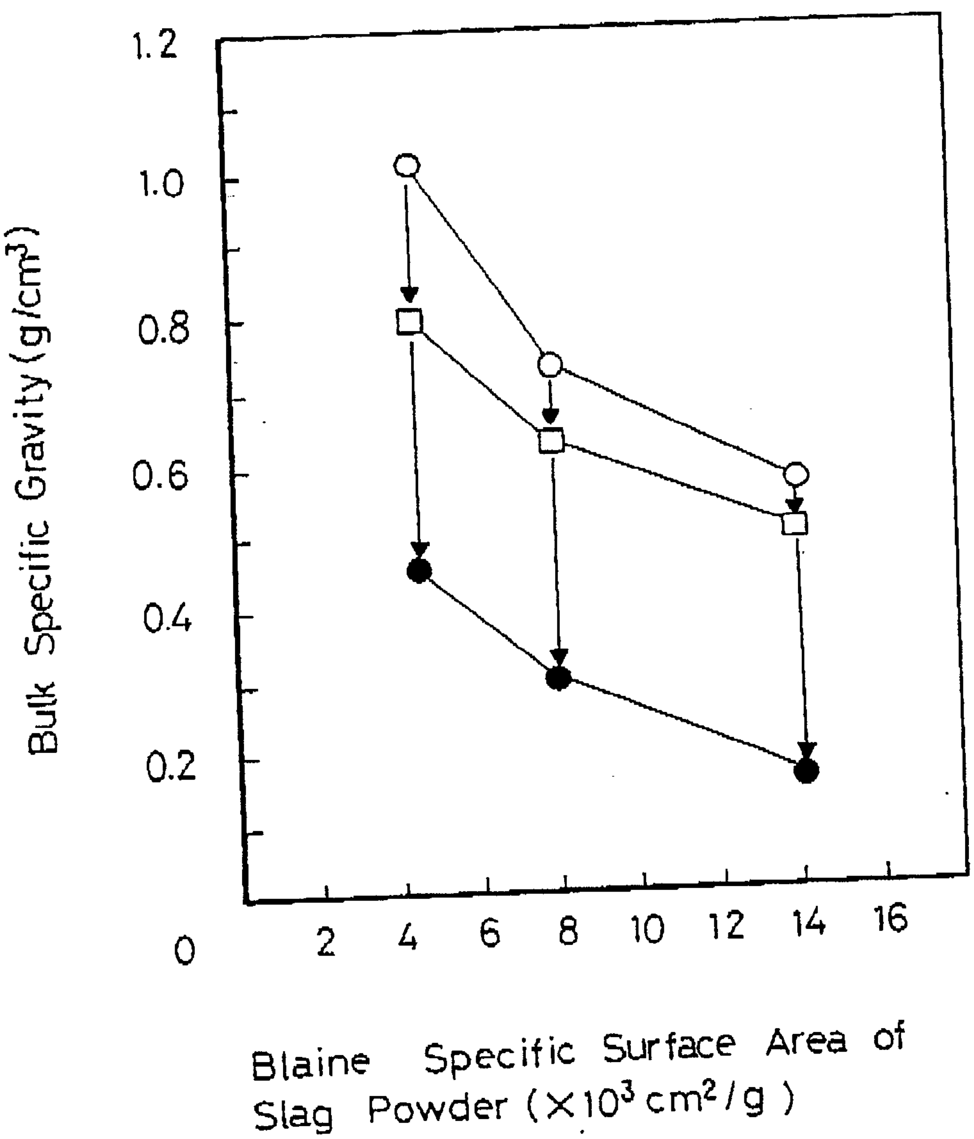
1.2
1.0
0.8
0.6
0.4
0.2
Bulk Specific Gravity (g/cm³)
0
2
4
6
8
10
12
14
16
Blaine Specific Surface Area of Slag Powder (×10³ cm²/g)

FIG. 5

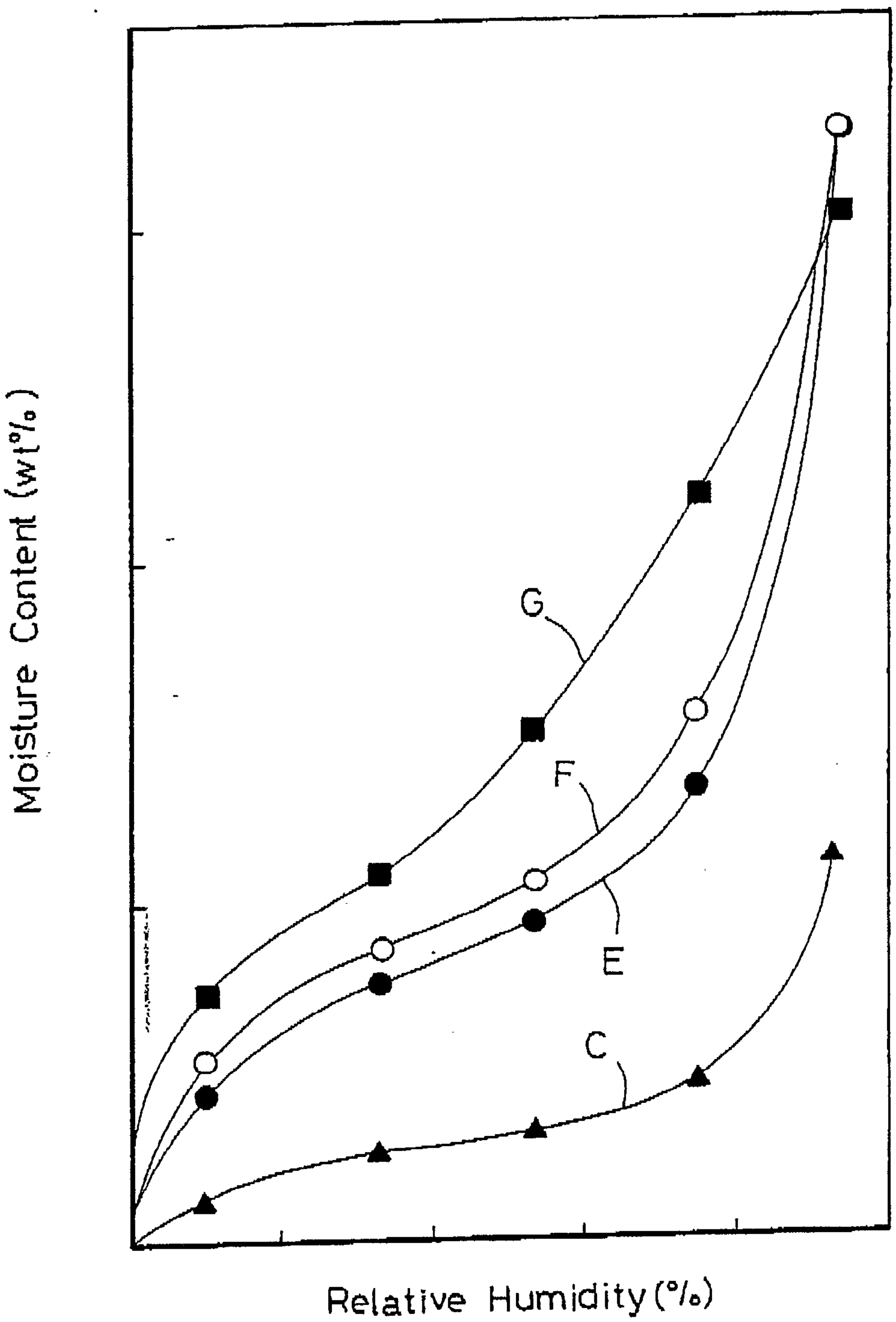


Equilibrium Moisture Content Curve

FIG. 6

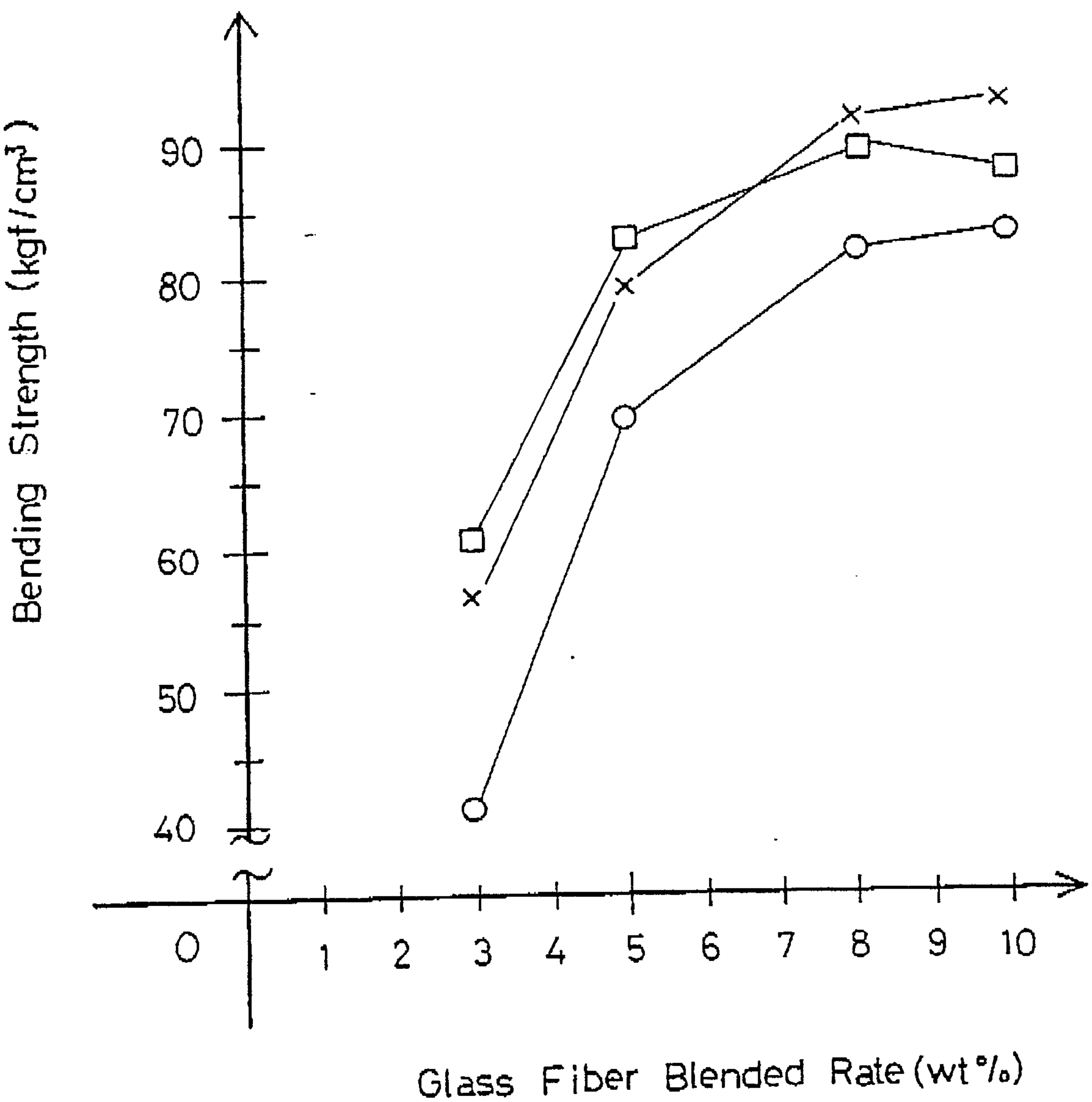
Bending Strength (kgf/cm³)
90
80
70
60
50
40
0
1
2
3
4
5
6
7
8
9
10
Glass Fiber Blended Rate (wt%)

FIG. 7

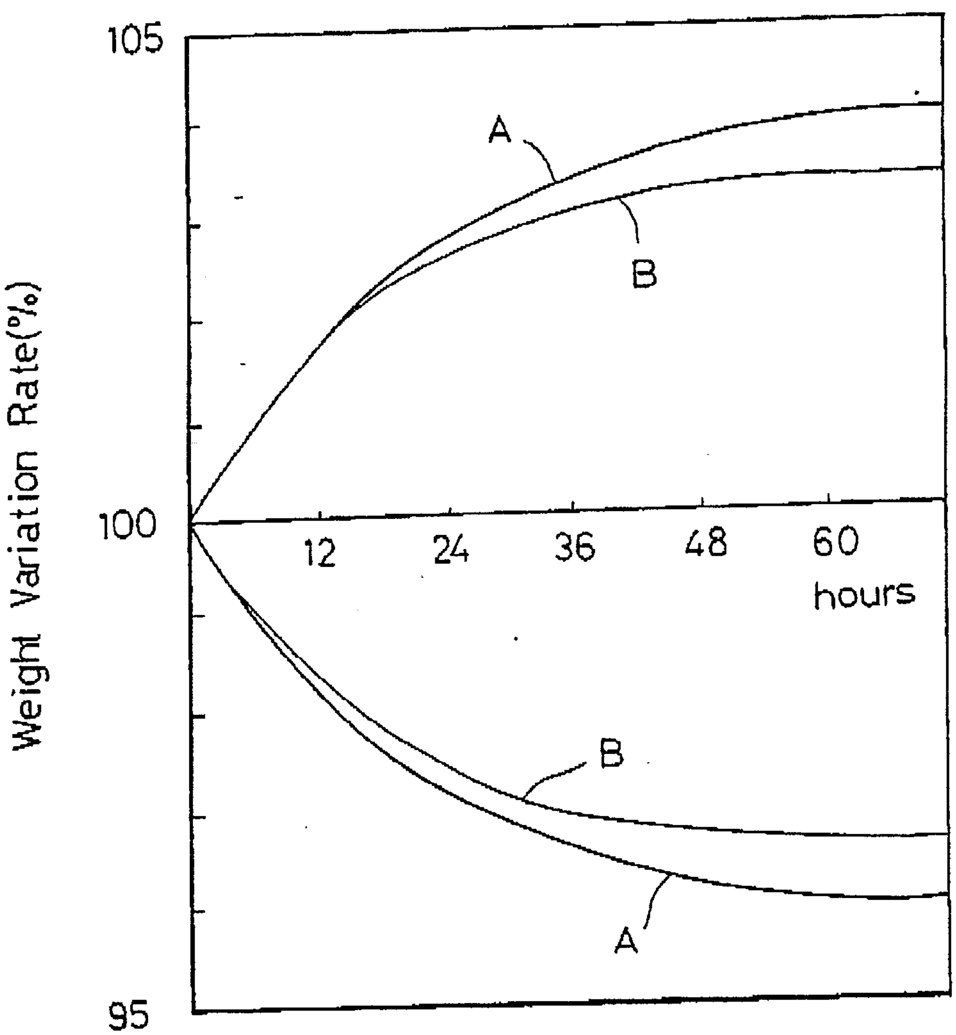

FIG. 8

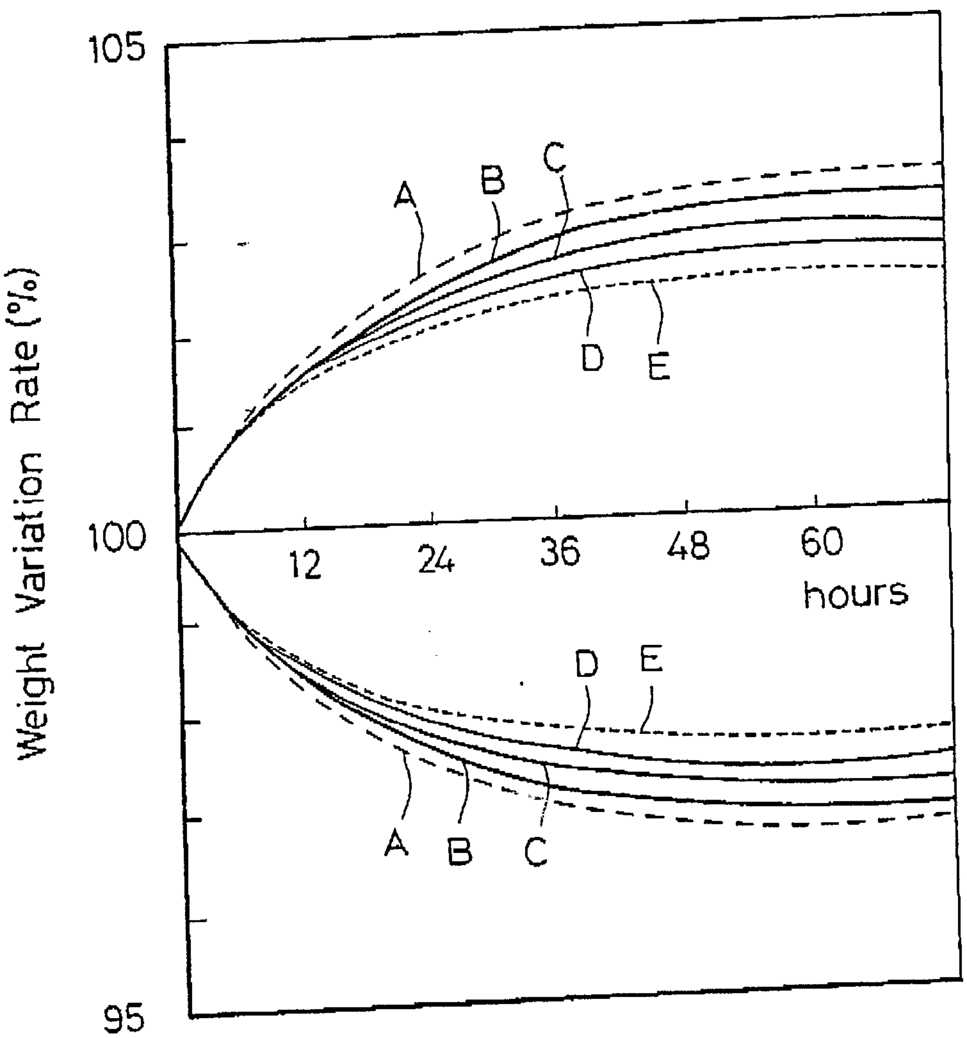

FIG. 9

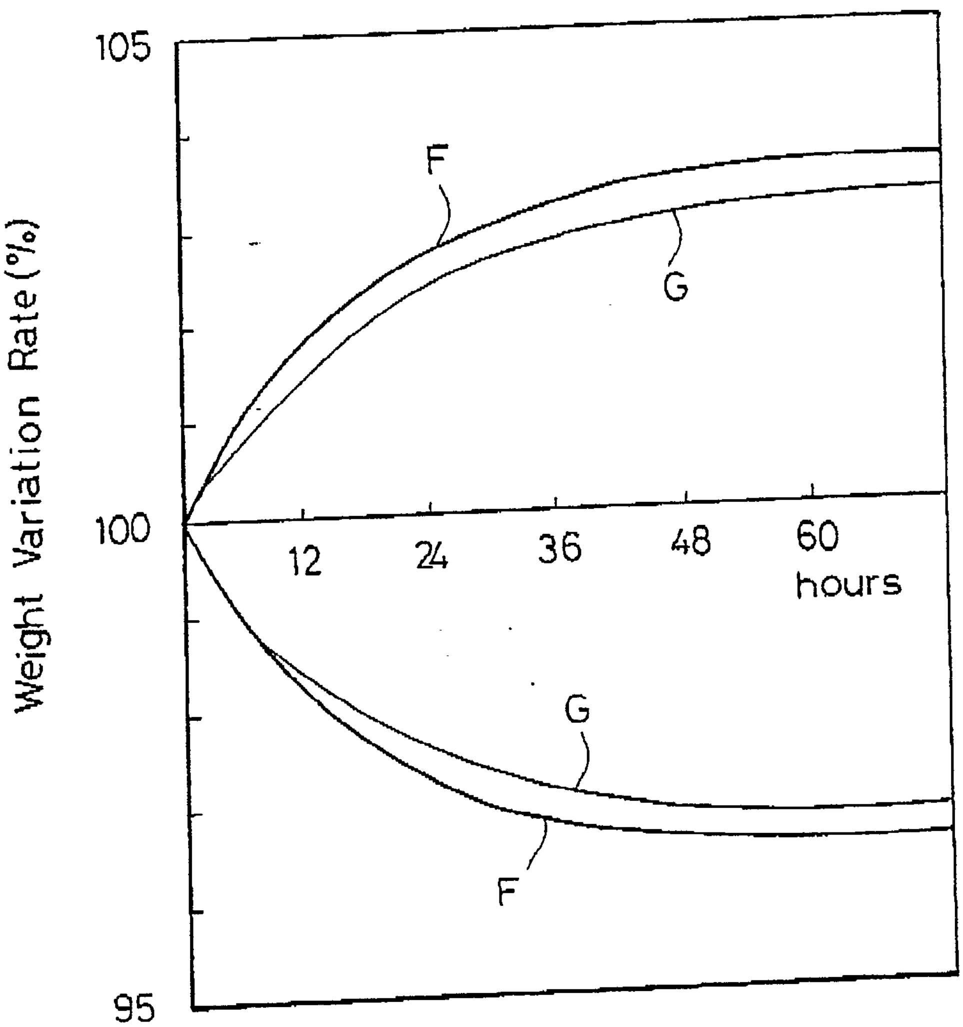

FIG.10

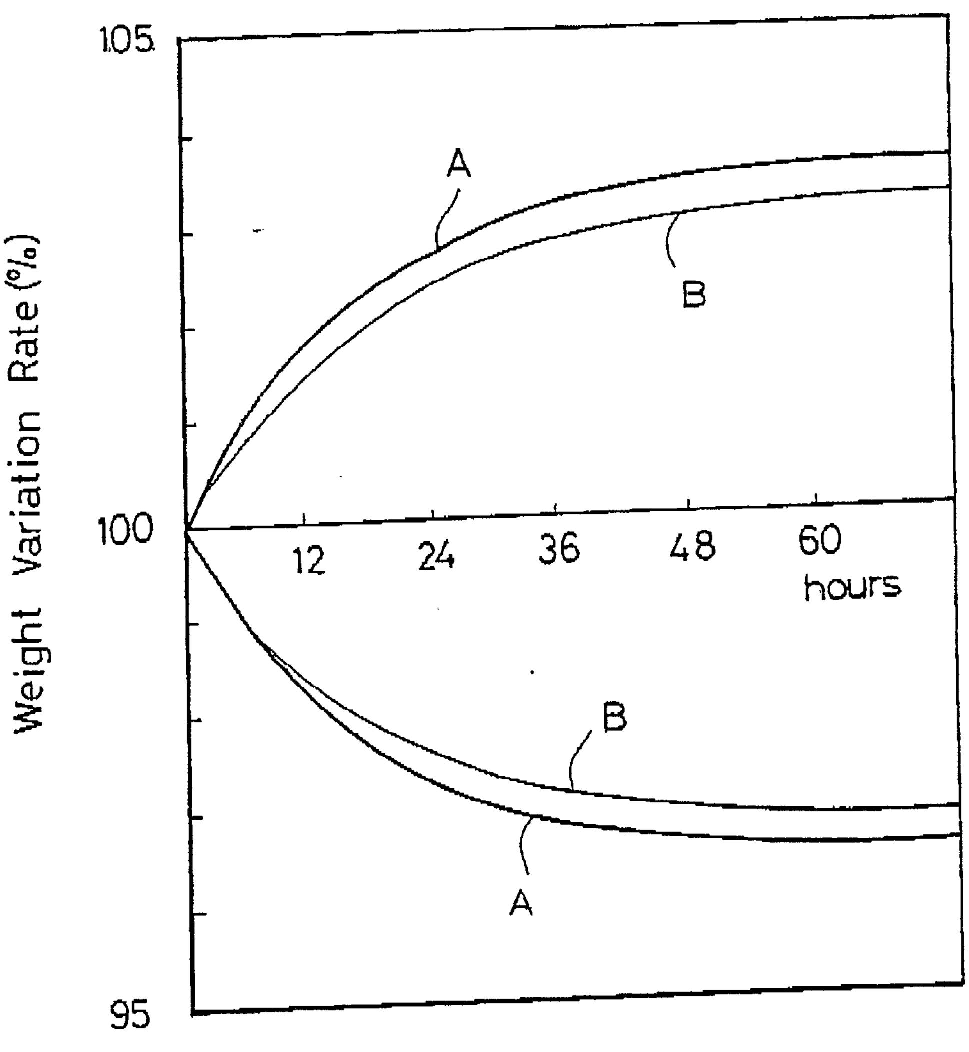

FIG. 11

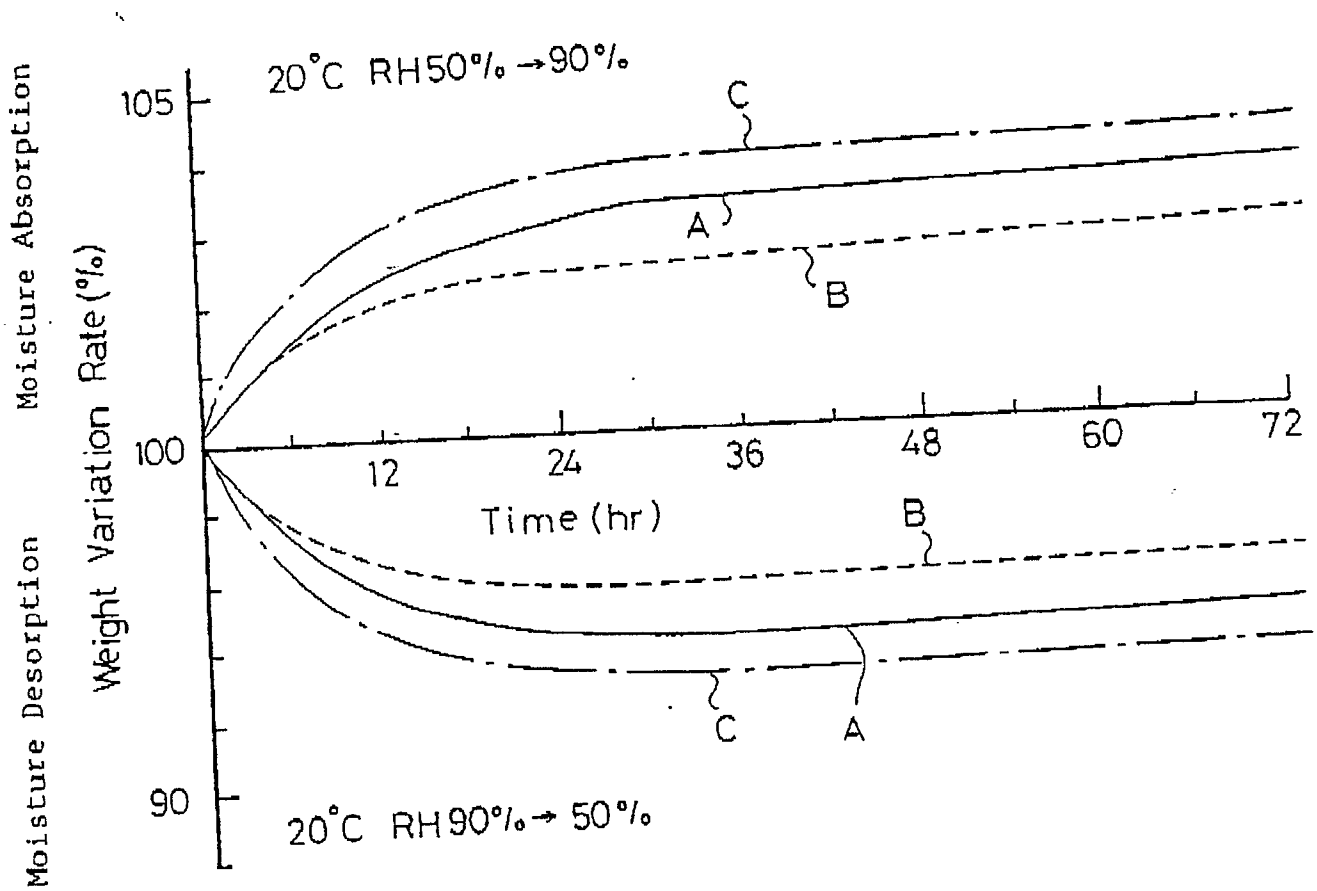
Moisture Absorption
Moisture Desorption
Weight Variation Rate (%)
105
100
90
20°C RH50% →90%
20°C RH90% → 50%
C
A
B
12
24
36
48
60
72
Time (hr)

FIG. 12

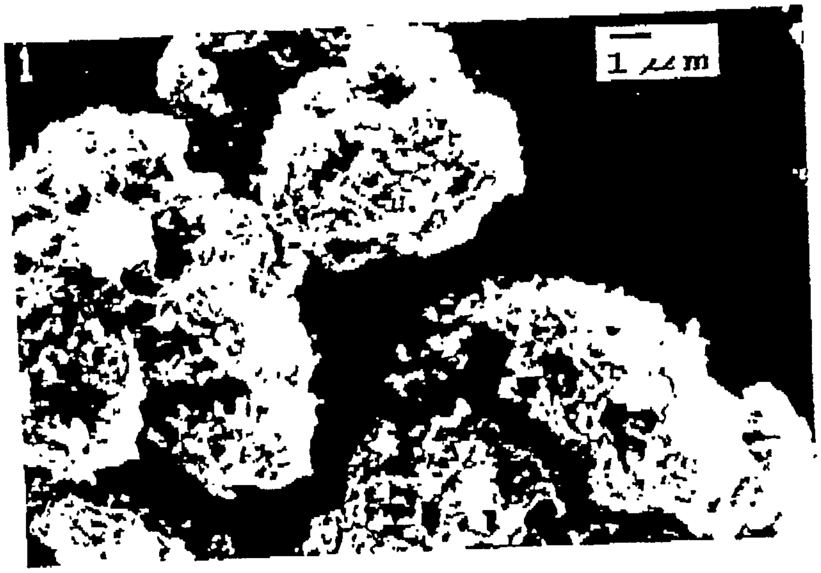


1 μm

FIG. 13

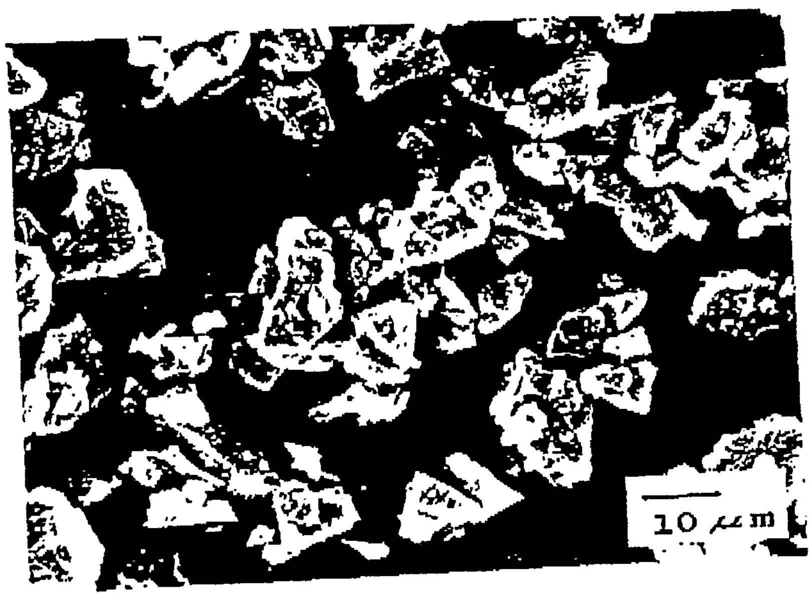


10 μm

# INTERNATIONAL SEARCH REPORT

International Application No PCT/JP89/01337

**I. CLASSIFICATION OF SUBJECT MATTER** (if several classification symbols apply, indicate all) [6]

According to International Patent Classification (IPC) or to both National Classification and IPC

Int. Cl[5] C04B18/14, C04B26/02, C04B28/18, C04B38/08

**II. FIELDS SEARCHED**

Minimum Documentation Searched [7]

| Classification System | Classification Symbols |
|---|---|
| IPC | C04B18/14, C04B26/02, C04B28/18, C04B38/08 |

Documentation Searched other than Minimum Documentation to the Extent that such Documents are Included in the Fields Searched [8]

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| Y | JP, B2, 57-7093 (Kogyo Gijutsuin-cho), 8 February 1982 (08. 02. 82), (Family: none) | 1 |
| Y | JP, A, 1-252559 (NKK Corporation), 9 October 1989 (09. 10. 89), (Family: none) | 3 |
| Y | JP, A, 57-129859 (Toyo Ink Manufacturing Co., Ltd.), 12 August 1982 (12. 08. 82), (Family: none) | 1, 3 |
| Y | JP, A, 48-28515 (Itokawa Kanichiro), 16 April 1973 (16. 04. 73), (Family: none) | 1, 3 |
| A | JP, A, 57-27359 (Asahi Glass Co., Ltd.), 15 February 1982 (15. 02. 82), (Family: none) | 5 - 6 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| March 8, 1990 (08. 03. 90) | March 26, 1990 (26. 03. 90) |
| **International Searching Authority** | **Signature of Authorized Officer** |
| Japanese Patent Office | |

International Application No. PCT/JP89/01337

**FURTHER INFORMATION CONTINUED FROM THE SECOND SHEET**

| | | |
|---|---|---|
| A | JP, A, 57-27958 (Asahi Glass Co., Ltd.), 15 February 1982 (15. 02. 82), (Family: none) | 5 - 6 |

**V. ☐ OBSERVATIONS WHERE CERTAIN CLAIMS WERE FOUND UNSEARCHABLE [1]**

This international search report has not been established in respect of certain claims under Article 17(2) (a) for the following reasons:

1. ☐ Claim numbers ... . , because they relate to subject matter not required to be searched by this Authority, namely:

2. ☐ Claim numbers .. .. . , because they relate to parts of the international application that do not comply with the prescribed requirements to such an extent that no meaningful international search can be carried out, specifically:

3. ☐ Claim numbers ..... ., because they are dependent claims and are not drafted in accordance with the second and third sentences of PCT Rule 6.4(a).

**VI. ☐ OBSERVATIONS WHERE UNITY OF INVENTION IS LACKING [2]**

This International Searching Authority found multiple inventions in this international application as follows:

1. ☐ As all required additional search fees were timely paid by the applicant, this international search report covers all searchable claims of the international application.

2. ☐ As only some of the required additional search fees were timely paid by the applicant, this international search report covers only those claims of the international application for which fees were paid, specifically claims:

3. ☐ No required additional search fees were timely paid by the applicant. Consequently, this international search report is restricted to the invention first mentioned in the claims; it is covered by claim numbers:

4. ☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.